(19) Europäisches Patentamt / European Patent Office / Office européen des brevets

(11) **EP 3 952 360 A1**

(12) **EUROPEAN PATENT APPLICATION**
published in accordance with Art. 153(4) EPC

(43) Date of publication:
**09.02.2022 Bulletin 2022/06**

(21) Application number: **20798079.8**

(22) Date of filing: **28.04.2020**

(51) International Patent Classification (IPC):
*H04W 4/70* (2018.01)

(52) Cooperative Patent Classification (CPC):
**H04L 5/00; H04W 4/70; H04W 72/04**

(86) International application number:
**PCT/CN2020/087380**

(87) International publication number:
**WO 2020/221225 (05.11.2020 Gazette 2020/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2019 CN 201910364457**

(71) Applicant: **Huawei Technologies Co., Ltd.**
**Shenzhen, Guangdong 518129 (CN)**

(72) Inventors:
• **ZHANG, Jinfang**
  **Shenzhen, Guangdong 518129 (CN)**
• **SU, Hongjia**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND DEVICE**

(57)     Embodiments of this application provide a communication method and apparatus, which may be applied to an internet of vehicles, for example, V2X, LTE-V, or V2V. The method includes: A first terminal device receives resource configuration information from a second terminal device; the first terminal device determines a first time domain resource based on the resource configuration information; and the first terminal device sends sidelink data to the second terminal device on a first resource, where the first time domain resource is a time domain resource of the first resource. In the embodiments of this application, the first terminal device receives the resource configuration information from the second terminal device, so that a conflict between resources used by the first terminal device and another sending terminal device that sends sidelink data to the second terminal device can be avoided, and a probability that the second terminal device cannot correctly receive data sent by sending terminal devices including the first terminal device can be reduced.

FIG. 9

FIG. 10

## Description

This application claims priority to Chinese Patent Application No. 201910364457.3, filed with the China National Intellectual Property Administration on April 30, 2019 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

Unmanned driving (unmanned driving)/automated driving (automated driving) technologies are attracting attention from automobile enterprises. A cellular network-based internet of vehicles technology is proposed in 3rd generation partnership project (3rd Generation Partnership Project, 3GPP for short). A vehicle-to-everything (vehicle-to-everything, V2X for short) communication system in long term evolution (Long Term Evolution, LTE for short) may provide intelligent transportation services including vehicle-to-vehicle (vehicle-to-vehicle, V2V), vehicle-to-pedestrian (vehicle-to-pedestrian, V2P), vehicle-to-infrastructure (vehicle-to-infrastructure, V2I for short), and vehicle-to-network (vehicle-to-network, V2N for short). Only V2N communication is performed by using an uplink/a downlink, and V2V/V2I/V2P data communication is performed by using a sidelink (sidelink, SL for short). The sidelink is defined for direct communication between terminal devices. That is, the direct communication between the terminal devices does not require forwarding through a base station. The terminal device herein may be a vehicle-mounted communication module, a communication terminal, a handheld communication terminal, or a road side unit (road side unit, RSU).

In a direct communication process between terminal devices, if a first terminal device needs to receive data sent by a plurality of second terminal devices, the first terminal device may not correctly receive data sent by at least a part of the second terminal devices.

## SUMMARY

This application provides a communication method and apparatus, to reduce, in a scenario in which a first terminal device needs to receive data sent by a plurality of second terminal devices, a probability that the first terminal device cannot correctly receives data sent by each second terminal device.

According to a first aspect, an embodiment of this application provides a communication method. The method includes: A first terminal device receives resource configuration information from a second terminal device; the first terminal device determines a first time domain resource based on the resource configuration information; and the first terminal device sends sidelink data to the second terminal device on a first resource, where the first time domain resource is a time domain resource of the first resource.

In this solution, the first terminal device determines, based on resource position information sent by the second terminal device, a resource used to send the sidelink data to the second terminal device, so that a conflict between resources used by the first terminal device and another sending terminal device that sends sidelink data to the second terminal device can be avoided, and therefore a probability that the second terminal device cannot correctly receive data sent by sending terminal devices including the first terminal device can be reduced.

Further, a quantity of sending terminal devices to which the second terminal device needs to feed back acknowledgment information on a same feedback channel resource can be reduced, and a probability that the sending terminal devices can receive the acknowledgment information fed back by the second terminal device can be improved.

With reference to the first aspect, in a possible implementation, the resource configuration information is used to indicate a position of the first time domain resource. Correspondingly, the resource configuration information may be in, but not limited to, the following several forms.

Form 1: The resource configuration information includes a first time domain resource index and a quantity M of indexes, where the first time domain resource index is used to indicate at least one time unit used to send the sidelink data to the second terminal device, the quantity M of indexes is a quantity of a plurality of time domain resource indexes maintained by the second terminal device, the plurality of time domain resource indexes include the first time domain resource index, and M is an integer greater than or equal to 2.

With the resource configuration information in this solution, efficiency of determining, by the second terminal device, a resource configuration to be sent to each sending terminal device is relatively high. With the resource configuration information of this form, it can be ensured that time domain resources used by the first terminal device and another sending terminal device that sends sidelink data to the second terminal device are different, so that a conflict between resources used by the first terminal device and the another sending terminal device that sends the sidelink data to the second terminal device is avoided, and a probability that the second terminal device cannot correctly receive data sent by sending terminal devices including the first terminal device is reduced. Further, with the resource configuration information of this form, a quantity of sending terminal devices to which the second terminal device needs to feed back acknowledgment information on a same feedback channel resource can be reduced, and a probability that the sending terminal devices can receive the acknowledgment information fed back by the second terminal device can be improved.

Form 2: The resource configuration information includes a bitmap corresponding to the first time domain resource.

In this solution, the bitmap may directly indicate the position of the first time domain resource, and the first terminal device does not need to obtain a first frequency domain resource through calculation. Therefore, in this solution, complexity of obtaining the first time domain resource by the first terminal device can be reduced, and therefore power consumption of the first terminal device can be reduced.

Form 3: The resource configuration information includes an index of a bitmap corresponding to the first time domain resource.

In this solution, the bitmap may directly indicate the bitmap, the bitmap may directly indicate the position of the first time domain resource, and the first terminal device does not need to obtain a first frequency domain resource through calculation. Therefore, in this solution, complexity of obtaining the first time domain resource by the first terminal device can be reduced, and therefore power consumption of the first terminal device can be reduced.

With reference to the first aspect, in a possible implementation, the first resource includes a first frequency domain resource and the first time domain resource, and the resource configuration information includes indication information of a start frequency domain resource of the first frequency domain resource. The method further includes: The first terminal device determines the start frequency domain resource of the first frequency domain resource based on the resource configuration information.

In this solution, the resource configuration information received by the first terminal device includes a start frequency domain resource of a frequency domain resource for sending the sidelink data to the second terminal device, and the second terminal device may indicate that start frequency domain resources for sending sidelink data by sending terminal devices including the first terminal device are the same, so that impact on terminal performance when the second terminal device feeds back acknowledgment information to the sending terminal devices is reduced.

With reference to the first aspect, in a possible implementation, the resource configuration information is further used to indicate a first frequency domain resource, and the first resource includes the first frequency domain resource and the first time domain resource. The method further includes: The first terminal device determines the first frequency domain resource based on the resource configuration information. Correspondingly, the resource configuration information may be in, but not limited to, the following several forms.

Form 1: The resource configuration information includes a bitmap corresponding to the first frequency domain resource.

In this solution, the bitmap may directly indicate a position of the first frequency domain resource, and a network device does not need to schedule the first frequency domain resource or the first terminal device does not need to select the first frequency domain resource from a resource pool. Therefore, in this solution, complexity of obtaining the first frequency domain resource by the first terminal device can be reduced, and therefore power consumption of the first terminal device can be reduced.

Form 2: The resource configuration information includes an index of a bitmap corresponding to the first frequency domain resource.

In this solution, the index of the bitmap may directly indicate the bitmap, the bitmap may directly indicate a position of the first frequency domain resource, and the first terminal device does not need to obtain the first frequency domain resource through calculation. Therefore, in this solution, complexity of obtaining the first frequency domain resource by the first terminal device can be reduced, and therefore power consumption of the first terminal device can be reduced.

With reference to the first aspect, in a possible implementation, one time unit including a feedback channel resource exists at an interval of K-1 time units, the feedback channel resource includes at least one feedback resource unit, and K is an integer greater than 1. The method further includes: The first terminal device obtains feedback resource information, where the feedback resource information is used to indicate a correspondence between K time units in the first time domain resource and at least one feedback resource unit; the first terminal device determines, based on a first time unit and the feedback resource information, a first feedback resource unit corresponding to the first time unit, where the first time unit is one of the K time units; and the first terminal device receives acknowledgment information of first sidelink data on a first feedback resource, where the first sidelink data is data sent by the first terminal device in the first time unit, and the first feedback resource is obtained based on the first feedback resource unit and a frequency domain resource used by the first terminal device to send the first sidelink data. The feedback resource information may be used to indicate a cyclic shift value corresponding to each of the K time units, and the cyclic shift value is used to generate a code sequence.

In this solution, feedback resource units corresponding to the K time units that correspond to a same feedback channel resource are different from each other, so that a conflict between receiving resources used when the first terminal device receives acknowledgment information fed back by the second terminal device for sidelink data sent by the first terminal device in the K time units is avoided.

In addition, in this solution, a frequency domain resource occupied by a feedback resource corresponding to a time unit is a part or all of a frequency domain resource used by a sending terminal device to send sidelink data in the time unit, so that impact on performance of a receiving terminal when the receiving terminal feeds back acknowledgment information can be reduced.

With reference to the first aspect, in a possible implementation, one time unit including a feedback channel resource exists at an interval of K-1 time units, the feedback channel resource includes at least one feedback resource unit, and K is an integer greater than 1. The first terminal device obtains feedback resource information, where the feedback resource information is used to indicate a correspondence between K time units in the first time domain resource and the at least one feedback resource unit. The method further includes: The first terminal device obtains feedback resource information, where the feedback resource information is used to indicate a correspondence between K time units in the first time domain resource and at least one feedback resource unit; the first terminal device determines, based on a first time unit and the feedback resource information, a first feedback resource unit corresponding to the first time unit, where the first time unit is one of the K time units; and the first terminal device receives acknowledgment information of first sidelink data on a first feedback resource, where the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units. The feedback resource information may be used to indicate a cyclic shift value corresponding to each of the K time units, and the cyclic shift value is used to generate a code sequence.

In this solution, feedback resource units corresponding to the K time units that correspond to a same feedback channel resource are different from each other, so that a conflict between receiving resources used when the first terminal device receives acknowledgment information fed back by the second terminal device for sidelink data sent by the first terminal device in the K time units is avoided.

In addition, in this solution, a frequency domain resource occupied by a feedback resource corresponding to a time unit is a part or all of a frequency domain resource used by a sending terminal device to send sidelink data in the reference time unit, so that efficiency of determining, by a receiving terminal and the sending terminal device, the feedback resource for feeding back acknowledgment information can be improved. Further, a probability that the sending terminal device receives the acknowledgment information fed back by the receiving terminal device can be improved.

According to a second aspect, an embodiment of this application provides a communication method.

The method includes: A second terminal device sends resource configuration information to a first terminal device; and the second terminal device receives sidelink data from the first terminal device on a first resource, where a first time domain resource is a time domain resource of the first resource.

In this solution, the second terminal device sends resource position information to the first terminal device, so that time-frequency resources used by the first terminal device and another sending terminal device that sends sidelink data to the second terminal device are different, and therefore a probability that the second terminal device cannot correctly receive data sent by sending terminal devices including the first terminal device is reduced.

Further, a quantity of sending terminal devices to which the second terminal device needs to feed back acknowledgment information on a same feedback channel resource can be reduced, and a probability that the sending terminal devices can receive the acknowledgment information fed back by the second terminal device can be improved.

With reference to the second aspect, in a possible implementation, the resource configuration information is used to indicate a position of the first time domain resource. Correspondingly, the resource configuration information may be in, but not limited to, the following several forms.

Form 1: The resource configuration information includes a first time domain resource index and a quantity M of indexes, where the first time domain resource index is used to indicate at least one time unit used to send the sidelink data to the second terminal device, the quantity M of indexes is a quantity of a plurality of time domain resource indexes maintained by the second terminal device, the plurality of time domain resource indexes include the first time domain resource index, and M is an integer greater than or equal to 2.

With the resource configuration information in this solution, efficiency of determining, by the second terminal device, a resource configuration to be sent to each sending terminal device is relatively high. With the resource configuration information of this form, it can be ensured that time domain resources used by the first terminal device and another sending terminal device that sends sidelink data to the second terminal device are different, so that a conflict between resources used by the first terminal device and the another sending terminal device that sends the sidelink data to the second terminal device is avoided, and a probability that the second terminal device cannot correctly receive data sent by sending terminal devices including the first terminal device is reduced. Further, with the resource configuration information of this form, a quantity of sending terminal devices to which the second terminal device needs to feed back acknowledgment information on a same feedback channel resource can be reduced, and a probability that the sending terminal devices can receive the acknowledgment information fed back by the second terminal device can be improved.

Form 2: The resource configuration information includes a bitmap corresponding to the first time domain resource.

In this solution, the bitmap may directly indicate the position of the first time domain resource, and the first terminal device does not need to obtain a first frequency domain resource through calculation. Therefore, in this solution, complexity of obtaining the first time domain resource by the first terminal device can be reduced, and therefore power consumption of the first terminal device can be reduced.

Form 3: The resource configuration information includes an index of a bitmap corresponding to the first time domain resource.

In this solution, the bitmap may directly indicate the bitmap, the bitmap may directly indicate the position of the first time domain resource, and the first terminal device does not need to obtain a first frequency domain resource through calculation. Therefore, in this solution, complexity of obtaining the first time domain resource by the first terminal device can be reduced, and therefore power consumption of the first terminal device can be reduced.

With reference to the second aspect, in a possible implementation, the first resource includes a first frequency domain resource and the first time domain resource, and the resource configuration information includes indication information of a start frequency domain resource of the first frequency domain resource.

With reference to the second aspect, in a possible implementation, the resource configuration information is further used to indicate a first frequency domain resource, and the first resource includes the first frequency domain resource and the first time domain resource. Correspondingly, the resource configuration information may be in, but not limited to, the following several forms.

Form 1: The resource configuration information includes a bitmap corresponding to the first frequency domain resource.

In this solution, the bitmap may directly indicate a position of the first frequency domain resource, and a network device does not need to schedule the first frequency domain resource or the first terminal device does not need to select the first frequency domain resource from a resource pool. Therefore, in this solution, complexity of obtaining the first frequency domain resource by the first terminal device can be reduced, and therefore power consumption of the first terminal device can be reduced.

Form 2: The resource configuration information includes an index of a bitmap corresponding to the first frequency domain resource.

In this solution, the index of the bitmap may directly indicate the bitmap, the bitmap may directly indicate a position of the first frequency domain resource, and the first terminal device does not need to obtain the first frequency domain resource through calculation. Therefore, in this solution, complexity of obtaining the first frequency domain resource by the first terminal device can be reduced, and therefore power consumption of the first terminal device can be reduced.

With reference to the second aspect, in a possible implementation, one time unit including a feedback channel resource exists at an interval of K-1 time units, the feedback channel resource includes at least one feedback resource unit, and K is an integer greater than 1. The method further includes: The second terminal device obtains feedback resource information, where the feedback resource information is used to indicate a correspondence between K time units in the first time domain resource and at least one feedback resource unit; the second terminal device determines, based on a first time unit and the feedback resource information, a first feedback resource unit corresponding to the first time unit, where the first time unit is one of the K time units; and the second terminal device sends, to the first terminal device, acknowledgment information of first sidelink data on a first feedback resource, where the first sidelink data is data sent by the first terminal device in the first time unit, and the first feedback resource is obtained based on the first feedback resource unit and a frequency domain resource used by the first terminal device to send the first sidelink data. The feedback resource information is used to indicate a cyclic shift value corresponding to each of the K time units, and the cyclic shift value is used to generate a code sequence.

In this solution, feedback resource units corresponding to the K time units that correspond to a same feedback channel resource are different from each other, so that a conflict between feedback resources used when the second terminal device feeds back acknowledgment information for sidelink data sent in the K time units is avoided.

In addition, in this solution, a frequency domain resource occupied by a feedback resource corresponding to a time unit is a part or all of a frequency domain resource used by a sending terminal device to send sidelink data in the time unit, so that impact on performance of a receiving terminal when the receiving terminal feeds back acknowledgment information can be reduced.

With reference to the second aspect, in a possible implementation, one time unit including a feedback channel resource exists at an interval of K-1 time units, the feedback channel resource includes at least one feedback resource unit, and K is an integer greater than 1. The method further includes: The second terminal device obtains feedback resource information, where the feedback resource information is used to indicate a correspondence between K time units in the first time domain resource and at least one feedback resource unit; the second terminal device determines, based on a first time unit and the feedback resource information, a first feedback resource unit corresponding to the first time unit, where the first time unit is one of the K time units; and the second terminal device sends, to the first terminal device, acknowledgment information of first sidelink data on a first feedback resource, where the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units. The feedback resource information is used to indicate a cyclic shift value corresponding to each of the K time units, and the cyclic shift value is used to generate a code sequence.

In this solution, feedback resource units corresponding to the K time units that correspond to a same feedback channel resource are different from each other, so that a conflict between feedback resources used when the second terminal device feeds back acknowledgment information for sidelink data sent in the K time units is avoided.

In addition, in this solution, a frequency domain resource occupied by a feedback resource corresponding to a time unit is a part or all of a frequency domain resource used by a sending terminal device to send sidelink data in the reference time unit, so that efficiency of determining, by a receiving terminal and the sending terminal device, the feedback resource for feeding back acknowledgment information can be improved. Further, a probability that the sending terminal device receives the acknowledgment information fed back by the receiving terminal device can be improved.

According to a third aspect, an embodiment of this application provides a communication method. One time unit including a feedback channel resource exists at an interval of K-1 time units, the feedback channel resource includes at least one feedback resource unit, and K is an integer greater than 1. The method includes: A sending terminal device obtains feedback resource information, where the feedback resource information is used to indicate a correspondence between K time units in a first time domain resource and at least one feedback resource unit; the sending terminal device determines, based on a first time unit and the feedback resource information, a first feedback resource unit corresponding to the first time unit, where the first time unit is one of the K time units; and the sending terminal device receives acknowledgment information of first sidelink data on a first feedback resource, where the first sidelink data is data sent by the sending terminal device in the first time unit, and the first feedback resource is obtained based on the first feedback resource unit and a frequency domain resource used by the sending terminal device to send the first sidelink data. The feedback resource information may be used to indicate a cyclic shift value corresponding to each of the K time units, and the cyclic shift value is used to generate a code sequence; or the feedback resource information may be used to indicate a PRB group corresponding to each of the K time units.

In this solution, feedback resource units corresponding to the K time units that correspond to a same feedback channel resource are different from each other, so that a conflict between receiving resources used when the sending terminal device receives acknowledgment information fed back by a receiving terminal device for sidelink data sent by the sending terminal device in the K time units is avoided.

In addition, in this solution, a frequency domain resource occupied by a feedback resource corresponding to a time unit is a part or all of a frequency domain resource used by the sending terminal device to send sidelink data in the time unit, so that impact on performance of the receiving terminal when the receiving terminal feeds back acknowledgment information can be reduced.

According to a fourth aspect, an embodiment of this application provides a communication method. One time unit including a feedback channel resource exists at an interval of K-1 time units, the feedback channel resource includes at least one feedback resource unit, and K is an integer greater than 1. The method further includes: A sending terminal device obtains feedback resource information, where the feedback resource information is used to indicate a correspondence between K time units in a first time domain resource and at least one feedback resource unit; the sending terminal device determines, based on a first time unit and the feedback resource information, a first feedback resource unit corresponding to the first time unit, where the first time unit is one of the K time units; and the sending terminal device receives acknowledgment information of first sidelink data on a first feedback resource, where the first sidelink data is data sent by the sending terminal device in the first time unit, the first feedback resource is obtained based on the first feedback resource unit and a frequency domain resource used by the sending terminal device to send second sidelink data in a reference time unit, and the reference time unit is the 1st time unit in the K time units. The feedback resource information may be used to indicate a cyclic shift value corresponding to each of the K time units, and the cyclic shift value is used to generate a code sequence; or the feedback resource information may be used to indicate a PRB group corresponding to each of the K time units.

In this solution, feedback resource units corresponding to the K time units that correspond to a same feedback channel resource are different from each other, so that a conflict between receiving resources used when the sending terminal device receives acknowledgment information fed back by a receiving terminal device for sidelink data sent by the sending terminal device in the K time units is avoided.

In addition, in this solution, a frequency domain resource occupied by a feedback resource corresponding to a time unit is a part or all of a frequency domain resource used by the sending terminal device to send sidelink data in the reference time unit, so that efficiency of determining, by the receiving terminal and the sending terminal device, the feedback resource for feeding back acknowledgment information can be improved. Further, a probability that the sending terminal device receives the acknowledgment information fed back by the receiving terminal device can be improved.

According to a fifth aspect, an embodiment of this application provides a communication method. One time unit including a feedback channel resource exists at an interval of K-1 time units, the feedback channel resource includes at least one feedback resource unit, and K is an integer greater than 1. The method includes: A receiving terminal device obtains feedback resource information, where the feedback resource information is used to indicate a correspondence between K time units in a first time domain resource and at least one feedback resource unit; the receiving terminal device determines, based on a first time unit and the feedback resource information, a first feedback resource unit corresponding to the first time unit, where the first time unit is one of the K time units; and the receiving terminal device sends, to a sending terminal device, acknowledgment information of first sidelink data on a first feedback resource, where the first sidelink data is data sent by the sending terminal device in the first time unit, and the first feedback resource is obtained based on the first feedback resource unit and a frequency domain resource used by the sending terminal device to send the first sidelink data. The feedback resource information may be used to indicate a cyclic shift value corresponding to each of the K time units, and the cyclic shift value is used to generate a code sequence; or the feedback resource information may be used to indicate a PRB group corresponding to each of the K time units.

According to a sixth aspect, an embodiment of this application provides a communication method. One time unit including a feedback channel resource exists at an interval of K-1 time units, the feedback channel resource includes at least one feedback resource unit, and K is an integer greater than 1. The method includes: A receiving terminal device obtains feedback resource information, where the feedback resource information is used to indicate a correspondence between K time units in a first time domain resource and at least one feedback resource unit; the receiving terminal device determines, based on a first time unit and the feedback resource information, a first feedback resource unit corresponding to the first time unit, where the first time unit is one of the K time units; and the receiving terminal device sends, to a sending terminal device, acknowledgment information of first sidelink data on a first feedback resource, where the first sidelink data is data sent by the sending terminal device in the first time unit, the first feedback resource is obtained based on the first feedback resource unit and a frequency domain resource used by the sending terminal device to send second sidelink data in a reference time unit, and the reference time unit is the 1st time unit in the K time units. The feedback resource information may be used to indicate a cyclic shift value corresponding to each of the K time units, and the cyclic shift value is used to generate a code sequence; or the feedback resource information may be used to indicate a PRB group corresponding to each of the K time units.

According to a seventh aspect, an embodiment of this application provides a communication apparatus. The apparatus includes: a receiving module, configured to receive resource configuration information from a second terminal device; a processing module, configured to determine a first time domain resource based on the resource configuration information; and a sending module, configured to send sidelink data to the second terminal device on a first resource, where the first time domain resource is a time domain resource of the first resource.

With reference to the seventh aspect, in a possible implementation, the resource configuration information is used to indicate a position of the first time domain resource. Correspondingly, the resource configuration information may be in, but not limited to, the following several forms.

Form 1: The resource configuration information includes a first time domain resource index and a quantity M of indexes, where the first time domain resource index is used to indicate at least one time unit used to send the sidelink data to the second terminal device, the quantity M of indexes is a quantity of a plurality of time domain resource indexes maintained by the second terminal device, the plurality of time domain resource indexes include the first time domain resource index, and M is an integer greater than or equal to 2.

Form 2: The resource configuration information includes a bitmap corresponding to the first time domain resource.

Form 3: The resource configuration information includes an index of a bitmap corresponding to the first time domain resource.

With reference to the seventh aspect, in a possible implementation, the first resource includes a first frequency domain resource and the first time domain resource, and the resource configuration information includes indication information of a start frequency domain resource of the first frequency domain resource. The processing module is further configured to determine the start frequency domain resource of the first frequency domain resource based on the resource configuration information.

With reference to the fifth aspect, in a possible implementation, the resource configuration information is further used to indicate a first frequency domain resource, and the first resource includes the first frequency domain resource and the first time domain resource. The processing module is further configured to determine the first frequency domain resource based on the resource configuration information. Correspondingly, the resource configuration information may be in, but not limited to, the following several forms.

Form 1: The resource configuration information includes a bitmap corresponding to the first frequency domain resource.

Form 2: The resource configuration information includes an index of a bitmap corresponding to the first frequency domain resource.

With reference to the seventh aspect, in a possible implementation, one time unit including a feedback channel resource exists at an interval of K-1 time units, the feedback channel resource includes at least one feedback resource unit, and K is an integer greater than 1. The processing module is further configured to: obtain feedback resource information, where the feedback resource information is used to indicate a correspondence between K time units in the first time domain resource and at least one feedback resource unit; and determine, based on a first time unit and the feedback resource information, a first feedback resource unit corresponding to the first time unit, where the first time unit is one of the K time units. The receiving module is further configured to receive acknowledgment information of first sidelink data on a first feedback resource, where the first sidelink data is data sent by the first terminal device in the first time unit, and the first feedback resource is obtained based on the first feedback resource unit and a frequency domain resource used by the first terminal device to send the first sidelink data.

With reference to the seventh aspect, in a possible implementation, one time unit including a feedback channel resource exists at an interval of K-1 time units, the feedback channel resource includes at least one feedback resource unit, and K is an integer greater than 1. The processing module is further configured to: obtain feedback resource information, where the feedback resource information is used to indicate a correspondence between K time units in the first time domain resource and at least one feedback resource unit; and determine, based on a first time unit and the feedback resource information, a first feedback resource unit corresponding to the first time unit, where the first time unit is one of the K time units. The receiving module is further configured to receive acknowledgment information of first sidelink data on a first feedback resource, where the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units.

According to an eighth aspect, an embodiment of this application provides a communication apparatus. The apparatus includes: a sending module, configured to send resource configuration information to a first terminal device; and a receiving module, configured to receive sidelink data from the first terminal device on a first resource, where a first time domain resource is a time domain resource of the first resource.

With reference to the eighth aspect, in a possible implementation, the resource configuration information is used to indicate a position of the first time domain resource. Correspondingly, the resource configuration information may be in, but not limited to, the following several forms.

Form 1: The resource configuration information includes a first time domain resource index and a quantity M of indexes, where the first time domain resource index is used to indicate at least one time unit used to send the sidelink data to the second terminal device, the quantity M of indexes is a quantity of a plurality of time domain resource indexes maintained by the second terminal device, the plurality of time domain resource indexes include the first time domain resource index, and M is an integer greater than or equal to 2.

Form 2: The resource configuration information includes a bitmap corresponding to the first time domain resource.

Form 3: The resource configuration information includes an index of a bitmap corresponding to the first time domain resource.

With reference to the eighth aspect, in a possible implementation, the first resource includes a first frequency domain resource and the first time domain resource, and the resource configuration information includes indication information of a start frequency domain resource of the first frequency domain resource.

With reference to the eighth aspect, in a possible implementation, the resource configuration information is further used to indicate a first frequency domain resource, and the first resource includes the first frequency domain resource and the first time domain resource. Correspondingly, the resource configuration information may be in, but not limited to, the following several forms.

Form 1: The resource configuration information includes a bitmap corresponding to the first frequency domain resource.

Form 2: The resource configuration information includes an index of a bitmap corresponding to the first frequency domain resource.

With reference to the eighth aspect, in a possible implementation, one time unit including a feedback channel resource exists at an interval of K-1 time units, the feedback channel resource includes at least one feedback resource unit, and K is an integer greater than 1. The communication apparatus further includes a processing module, where the processing module is configured to: obtain feedback resource information, where the feedback resource information is used to indicate a correspondence between K time units in the first time domain resource and at least one feedback resource unit; and determine, based on a first time unit and the feedback resource information, a first feedback resource unit corresponding to the first time unit, where the first time unit is one of the K time units. The sending module is further configured to send, to the first terminal device, acknowledgment information of first sidelink data on a first feedback resource, where the first sidelink data is data sent by the first terminal device in the first time unit, and the first feedback resource is obtained based on the first feedback resource unit and a frequency domain resource used by the first terminal device to send the first sidelink data. The feedback resource information is used to indicate a cyclic shift value corresponding to each of the K time units, and the cyclic shift value is used to generate a code sequence.

With reference to the eighth aspect, in a possible implementation, one time unit including a feedback channel resource exists at an interval of K-1 time units, the feedback channel resource includes at least one feedback resource unit, and K is an integer greater than 1. The communication apparatus further includes a processing module, where the processing module is configured to: obtain feedback resource information, where the feedback resource information is used to indicate a correspondence between K time units in the first time domain resource and at least one feedback resource unit; and determine, based on a first time unit and the feedback resource information, a first feedback resource unit corresponding to the first time unit, where the first time unit is one of the K time units. The sending module is further configured to send, to the first terminal device, acknowledgment information of first sidelink data on a first feedback resource, where the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units. The feedback resource information is used to indicate a cyclic shift value corresponding to each of the K time units, and the cyclic shift value is used to generate a code sequence.

A ninth aspect provides a communication apparatus. The communication apparatus may be a terminal device, or may be a chip in the terminal device. The apparatus may include a processing unit and a transceiver unit. When the apparatus is the terminal device, the processing unit may be a processor, and the transceiver unit may be a transceiver. The terminal device may further include a storage unit, and the storage unit may be a memory. The storage unit is configured to store instructions, and the processing unit executes the instructions stored in the storage unit, so that the terminal device performs corresponding functions in the first aspect. When the apparatus is the chip in the terminal device, the processing unit may be a processor, and the transceiver unit may be an input/output interface, a pin, a circuit, or the like. The processing unit executes instructions stored in a storage unit, so that the terminal device performs corresponding functions in the first aspect. The storage unit may be a storage unit (for example, a register or a cache) inside the chip, or may be a storage unit (for example, a read-only memory or a random access memory) that is outside the chip and that is in the terminal device.

A tenth aspect provides a communication apparatus. The communication apparatus may be a network device, or may be a chip in the network device. The apparatus may include a processing unit and a transceiver unit. When the apparatus is the network device, the processing unit may be a processor, and the transceiver unit may be a transceiver. The network device may further include a storage unit, and the storage unit may be a memory. The storage unit is configured to store instructions, and the processing unit executes the instructions stored in the storage unit, so that the network device performs corresponding functions in the first aspect. When the apparatus is the chip in the network device, the processing unit may be a processor, and the transceiver unit may be an input/output interface, a pin, a circuit, or the like. The processing unit executes instructions stored in a storage unit, so that the network device performs corresponding functions in the first aspect. The storage unit may be a storage unit (for example, a register or a cache) inside the chip, or may be a storage unit (for example, a read-only memory or a random access memory) that is outside the chip and that is in the network device.

An eleventh aspect provides a communication apparatus. The apparatus includes a processor and a storage medium. The storage medium stores instructions; and when the instructions are run by the processor, the processor is enabled to perform the method according to any one of the first aspect or the possible implementations of the first aspect, any one of the second aspect or the possible implementations of the second aspect, any one of the third aspect or the possible implementations of the third aspect, any one of the fourth aspect or the possible implementations of the fourth aspect, any one of the fifth aspect or the possible implementations of the fifth aspect, or any one of the sixth aspect or the possible implementations of the sixth aspect.

A twelfth aspect provides a readable storage medium. The readable storage medium stores a computer program; and when the computer program is executed, the method according to any one of the first aspect or the possible implementations of the first aspect, any one of the second aspect or the possible implementations of the second aspect, any one of the third aspect or the possible implementations of the third aspect, any one of the fourth aspect or the possible implementations of the fourth aspect, any one of the fifth aspect or the possible implementations of the fifth aspect, or any one of the sixth aspect or the possible implementations of the sixth aspect is implemented.

A thirteenth aspect provides a computer program product. The computer program product includes computer program code; and when the computer program code is run on a communication device, the communication device is enabled to perform the method according to any one of the first aspect or the possible implementations of the first aspect, any one of the second aspect or the possible implementations of the second aspect, any one of the third aspect or the possible implementations of the third aspect, any one of the fourth aspect or the possible implementations of the fourth aspect, any one of the fifth aspect or the possible implementations of the fifth aspect, or any one of the sixth aspect or the possible implementations of the sixth aspect.

In this application, the second terminal device configures, for the first terminal device, a resource used by the first terminal device to send the sidelink data, so that a conflict between resources used by the first terminal device and another sending terminal device that sends sidelink data to the second terminal device can be avoided, and therefore a probability that the second terminal device cannot correctly receive data sent by sending terminal devices including the first terminal device can be reduced. Further, a quantity of sending terminal devices to which the second terminal device needs to feed back acknowledgment information on a same feedback channel resource can be reduced, and a probability that the sending terminal devices can receive the acknowledgment information fed back by the second terminal device can be improved.

## BRIEF DESCRIPTION OF DRAWINGS

FIG. 1 is a schematic diagram of a short-format PSFCH;

FIG. 2 is a schematic diagram of a long-format PSFCH;

FIG. 3 is a first schematic diagram of a resource configuration of a short-format PSFCH according to an embodiment of this application;

FIG. 4 is a second schematic diagram of a resource configuration of a short-format PSFCH according to an embodiment of this application;

FIG. 5 is a first schematic diagram of a resource configuration of a long-format PSFCH according to an embodiment of this application;

FIG. 6 is a second schematic diagram of a resource configuration of a long-format PSFCH according to an embodiment of this application;

FIG. 7 is a first schematic diagram of a relationship between a time domain resource occupied by a PSFCH and a time domain resource occupied by a corresponding PSSCH according to an embodiment of this application;

FIG. 8 is a second schematic diagram of a relationship between a time domain resource occupied by a PSFCH and a time domain resource occupied by a corresponding PSSCH according to an embodiment of this application;

FIG. 9 is a schematic diagram of a system architecture according to an embodiment of this application;

FIG. 10 is a signaling exchange diagram according to an embodiment of this application;

FIG. 11 is a first schematic diagram of a data channel according to an embodiment of this application;

FIG. 12 is a second schematic diagram of a data channel according to an embodiment of this application;

FIG. 13 is a third schematic diagram of a data channel according to an embodiment of this application;

FIG. 14 is a fourth schematic diagram of a data channel according to an embodiment of this application;

FIG. 15 is a fifth schematic diagram of a data channel according to an embodiment of this application;

FIG. 16 is a sixth schematic diagram of a data channel according to an embodiment of this application;

FIG. 17 is a seventh schematic diagram of a data channel according to an embodiment of this application;

FIG. 18 is a first flowchart of a communication method according to an embodiment of this application;

FIG. 19 is a first schematic diagram of a feedback resource configuration according to an embodiment of this application;

FIG. 20 is a second schematic diagram of a feedback resource configuration according to an embodiment of this application;

FIG. 21 is a second flowchart of a communication method according to an embodiment of this application;

FIG. 22 is a third flowchart of a communication method according to an embodiment of this application;

FIG. 23 is a third schematic diagram of a feedback resource configuration according to an embodiment of this application;

FIG. 24 is a fourth flowchart of a communication method according to an embodiment of this application;

FIG. 25 is a schematic diagram of a structure of a communication apparatus according to an embodiment of this application;

FIG. 26 is a schematic diagram of a structure of a terminal device according to an embodiment of this application;

FIG. 27 is a schematic diagram of a structure of a communication apparatus according to another embodiment of this application;

FIG. 28 is a schematic diagram of a structure of a communication apparatus according to another embodiment of this application; and

FIG. 29 is a schematic diagram of a structure of a communication apparatus according to another embodiment of this application.

## DETAILED DESCRIPTION OF EMBODIMENTS

To better understand this application, the following elements are introduced into this application.

1. SL communication includes two communication modes: a mode 1 (mode 1) and a mode 2 (mode 2). In the mode 1, sidelink communication is based on scheduling performed by a network device (for example, a base station), and a terminal device sends a control message and data of sidelink communication on a scheduled time-frequency resource based on scheduling information of the network device. The scheduling performed by the network device may be dynamic scheduling, or may be semi-persistent scheduling. In the mode 2, a terminal device selects a time-frequency resource used for communication from available time-frequency resources included in time-frequency resources used for sidelink communication, and sends a control message and data of the sidelink communication on the selected time-frequency resource.

Specifically, in the mode 1, the network device may schedule the time-frequency resource used for the sidelink communication in a manner of configuring a time-frequency resource pattern (time-frequency resource pattern, TFRP) for the terminal device. In the mode 2, the terminal device may also determine the time-frequency resource used for the sidelink communication in a manner of selecting a TFRP.

2. In unicast/multicast transmission, to improve transmission reliability and reduce a transmission delay, a physical layer hybrid automatic repeat request (hybrid automatic repeat request, HARQ for short) technology may be used. A 3GPP standard defines a physical sidelink feedback channel (physical sidelink feedback channel, PSFCH for short) for a sidelink. The PSFCH is used to send sidelink feedback control information (sidelink feedback control information, SFCI for short), may be used to feed back at least an acknowledgment (Acknowledgment, ACK for short) or a negative acknowledgment (Negative Acknowledgment, NACK for short) that is used by a receiving terminal device to feed back, to a sending terminal device, whether receiving is successfully performed, and may be further used to feed back other information, for example, a channel status report (channel status report, CSI for short), an available resource sensed by the receiving terminal device, and an interference status report measured by the receiving terminal device. Feedback information in the embodiments of this application is acknowledgment information: an ACK or a NACK.

Several HARQ feedback modes are described below.

A first feedback mode is an ACK/NACK feedback mode. If a receiving device correctly decodes data sent by a sending device, the receiving device feeds back an ACK to the sending device; otherwise, the receiving device feeds back a NACK to the sending device.

A second feedback mode is a NACK-only (NACK-only) feedback mode. If a receiving device correctly decodes data sent by a sending device, the receiving device does not perform any operation; otherwise, the receiving device feeds back a NACK to the sending device.

A third feedback mode is an ACK-only (ACK-only) feedback mode. If a receiving device correctly decodes data sent by a sending device, the receiving device feeds back an ACK to the sending device; otherwise, the receiving device does not perform any operation.

3. PSFCH format: PSFCH formats include a short format (short format) and a long format (long format).

First, a short-format PSFCH is described.

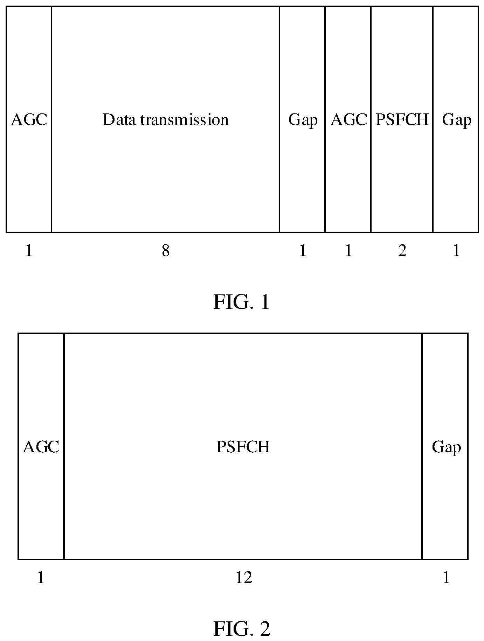

The short-format PSFCH occupies the last several (one to three) symbols of a slot in time domain. The following describes an example of the short-format PSFCH with reference to FIG. 1. FIG. 1 is a schematic diagram of a short-format PSFCH. With reference to FIG. 1, when a slot includes 14 symbols, the $1^{st}$ symbol of the slot is used for automatic gain control (automatic gain control, AGC for short), the $2^{nd}$ symbol to the $9^{th}$ symbol (occupying eight symbols) are used for data transmission, the $10^{th}$ symbol is a gap (gap) symbol for transition between reception and transmission (occupying one symbol), the $11^{th}$ symbol is used for AGC for receiving feedback information (occupying one symbol), the $12^{th}$ symbol and the $13^{th}$ symbol are used for PSFCH transmission (occupying two symbols), and the $14^{th}$ symbol is a gap symbol for transition between reception and transmission (occupying one symbol).

It should be noted that FIG. 1 shows only a possible form of the short-format PSFCH. A quantity of symbols occupied by the short-format PSFCH may have another configuration based on different symbol configurations in a slot. For example, the short-format PSFCH may alternatively occupy one symbol. Details are not described herein one by one.

Second, a long-format PSFCH is described.

The long-format PSFCH occupies all available symbols of a slot in time domain. The following describes an example of the long-format PSFCH with reference to FIG. 2. FIG. 2 is a schematic diagram of a long-format PSFCH. With reference to FIG. 2, when a slot includes 14 symbols, the $1^{st}$ symbol of the slot is used for AGC, the $2^{nd}$ symbol to the $13^{th}$ symbol are used for PSFCH transmission (occupying 11 symbols), and the $14^{th}$ symbol is a gap symbol for transition between reception and transmission. It should be noted that FIG. 2 shows only a possible form of the long-format PSFCH. A quantity of symbols occupied by the long-format PSFCH may have another configuration based on different symbol configurations in a slot. For example, the long-format PSFCH may occupy 11 symbols in a slot in which an extended cyclic prefix (extended cyclic prefix, ECP for short) is included. Details are not described herein one by one.

Further, PSFCH resources may be configured to be periodic, and a periodicity is K time units, for example, K slots. For example, when K=1, a PSFCH resource is configured in each slot; when K> 1, a PSFCH resource is configured every K slots. It may be understood that the PSFCH resource may be referred to as a feedback channel resource.

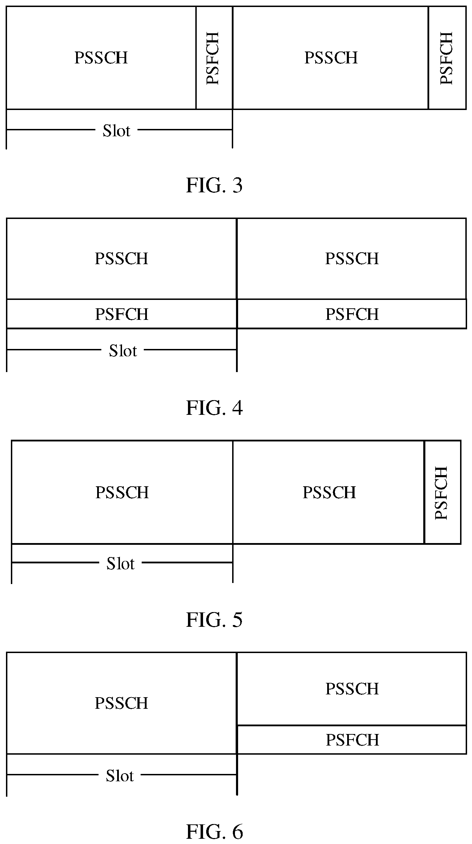

FIG. 3 is a first schematic diagram of a resource configuration of a short-format PSFCH according to an embodiment of this application, FIG. 4 is a second schematic diagram of a resource configuration of a short-format PSFCH according to an embodiment of this application, FIG. 5 is a first schematic diagram of a resource configuration of a long-format PSFCH according to an embodiment of this application, and FIG. 6 is a second schematic diagram of a resource configuration of a long-format PSFCH according to an embodiment of this application.

With reference to FIG. 3, a time unit shown in FIG. 3 is a slot, and a PSFCH resource periodicity is one slot. With reference to FIG. 4, a time unit shown in FIG. 4 is a slot, and a PSFCH resource periodicity is two slots. With reference to FIG. 5, a time unit shown in FIG. 5 is a slot, and a PSFCH resource periodicity is one slot. With reference to FIG. 6, a time unit shown in FIG. 6 is a slot, and a PSFCH resource periodicity is two slots.

4. Relationship between a time domain resource and/or a frequency domain resource occupied for data sending and a time domain resource and/or a frequency domain resource occupied by corresponding acknowledgment information:

After a sending device sends data to a receiving device, the receiving device sends acknowledgment information to the sending device based on whether the data is correctly decoded. Based on a terminal device processing capability, a minimum time unit interval between a time unit occupied by the sending device to send the data and a time unit occupied by the receiving device to send the acknowledgment information needs to be defined, to ensure that the receiving device can complete data receiving and prepare to send the acknowledgment information. If it is defined that the minimum time unit interval L is equal to 1, when a time unit is a slot, a next slot of a slot occupied by a data channel (where the data channel may be a PSSCH) for sending the data is a slot occupied by a feedback channel (where when the data channel is the PSSCH, the feedback channel may be a PSFCH) for feeding back the acknowledgment information.

A frequency domain resource occupied by the feedback channel may have a correspondence with a frequency domain resource occupied by the data channel. The following describes, by using an example in which the data channel is a PSSCH and the feedback channel is a PSFCH, the correspondence between the frequency domain resource occupied by the feedback channel and the frequency domain resource occupied by the data channel.

For a short-format PSFCH, a start frequency domain resource of the PSFCH is the same as a start frequency domain resource of a corresponding PSSCH, and a quantity of subchannels corresponding to the frequency domain resource occupied by the PSFCH is less than or equal to a quantity of subchannels occupied by the corresponding PSSCH. If the sending device sends the data on a PSSCH a, the receiving device sends, on a PSFCH b, the acknowledgment information that is sent based on whether the data is correctly decoded. That is, the PSFCH b is a PSFCH corresponding to the PSSCH a, and the PSSCH a is a PSSCH corresponding to the PSFCH b.

In the embodiments, a frequency domain resource occupied by a subchannel is a minimum frequency domain resource for sending data. In other words, frequency domain resources used for sidelink communication in a resource pool are divided into one or more parts, and each part of frequency domain resources is a frequency domain resource occupied by one subchannel.

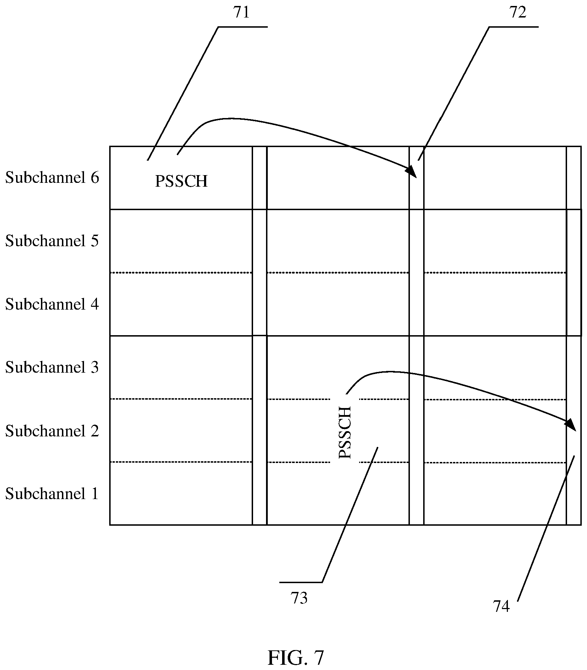

FIG. 7 is a first schematic diagram of a relationship between a time domain resource occupied by a PSFCH and a time domain resource occupied by a corresponding PSSCH according to an embodiment of this application. With reference to FIG. 7, when a frequency domain resource occupied by a PSSCH 71 is a frequency domain resource occupied by the 6th subchannel, a corresponding PSFCH is a PSFCH numbered 72, and the PSFCH 72 and the PSSCH 71 occupy a same frequency domain resource. When a frequency domain resource occupied by a PSSCH 73 is a frequency domain resource occupied by the 1st subchannel, the 2nd subchannel, and the 3rd subchannel, a PSFCH corresponding to the PSSCH 73 is a PSFCH numbered 74, and the PSFCH 74 and the PSSCH 73 occupy a same frequency domain resource.

For a long-format PSFCH, a frequency domain resource occupied by the PSFCH may be designed to be different from a frequency domain resource occupied by a PSSCH. For example, the frequency domain resource occupied by the PSFCH may be a frequency domain resource included in a physical resource block (physical resource block, PRB for short). In a resource pool, a PSFCH resource is defined as (start_PRB, no_PRB), where start_PRB may be a start PRB of the PSFCH resource, no_PRB is a quantity of subchannels included in the PSFCH resource. That is, the PSFCH resource occupies a quantity no_PRB of frequency domain resources starting from start_PRB in the resource pool.

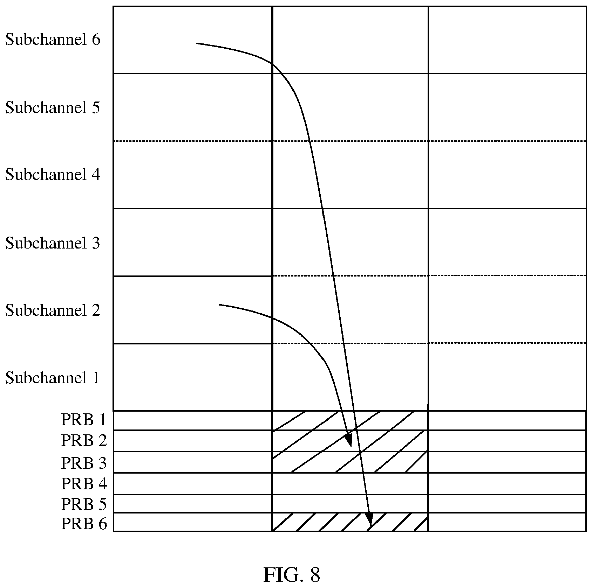

FIG. 8 is a second schematic diagram of a relationship between a time domain resource occupied by a PSFCH and a time domain resource occupied by a corresponding PSSCH according to an embodiment of this application. With reference to FIG. 8, a resource pool includes six subchannels, and each subchannel includes six PRBs in one time unit. Six PRBs starting from a frequency domain start position of the resource pool are reserved for a PSFCH. If a start subchannel in one or more subchannels corresponding to a PSSCH is an nth subchannel, a start PRB in one or more PRBs corresponding to a frequency domain resource occupied by a corresponding PSFCH is an nth PRB that is reserved, and a quantity of PRBs corresponding to the frequency domain resource occupied by the PSFCH is less than or equal to a quantity of subchannels corresponding to the PSSCH. A PSSCH 81 shown in FIG. 8 corresponds to the 4th subchannel to the 6th subchannel, and a frequency domain resource of a corresponding PSFCH 82 corresponds to the 4th PRB to the 6th PRB. The 1st PRB to the

6th PRB in a padding part in FIG. 8 are PRBs occupied by a feedback channel resource.

5. A time unit in the embodiments is a time unit with a different granularity such as a frame, a subframe, a slot, a mini-slot, or a symbol.

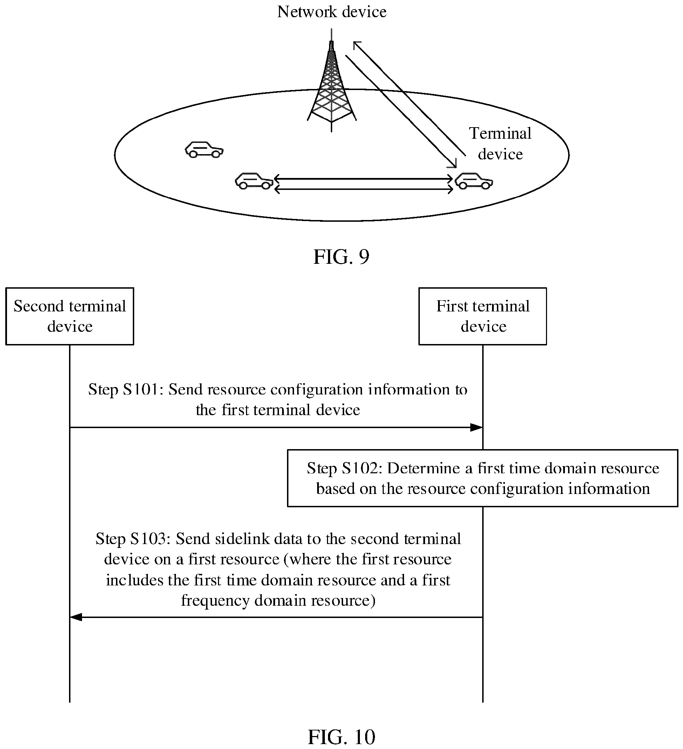

FIG. 9 is a schematic diagram of a system architecture according to an embodiment of this application. As shown in FIG. 9, the system architecture includes a network device and a plurality of terminal devices.

The network device and the plurality of terminal devices in this embodiment may perform transmission with each other by using Uu (UTRAN-to-UE) interfaces, and the plurality of terminal devices in this embodiment may perform transmission with each other by using an SL interface.

The network device in this embodiment may be a traditional macro base station (evolved node B, eNB) in a universal mobile telecommunications system/long term evolution (Universal Mobile Telecommunications System/Long Term Evolution, UMTS/LTE) wireless communication system, may be a micro base station (eNB) in a heterogeneous network (Heterogeneous Network, HetNet) scenario, may be a baseband processing unit (Baseband Unit, BBU) and a remote radio unit (Remote Radio Unit, RRU) in a distributed base station scenario, may be a baseband pool (BBU pool) and a remote radio unit (RRU) in a cloud radio access network (Cloud Radio Access Network, CRAN) scenario, and may be a gNB in a future wireless communication system.

The terminal device in this embodiment may be a vehicle-mounted communication module or another embedded communication module, or may be a handheld communication device, including a mobile phone, a tablet computer, or the like, or may include a roadside unit (roadside unit, RSU).

The following describes, based on the system architecture, a communication method in this application with reference to specific embodiments.

FIG. 10 is a signaling exchange diagram according to an embodiment of this application. With reference to FIG. 10, a method in this embodiment includes the following steps.

Step S101: A second terminal device sends resource configuration information to a first terminal device.

Specifically, in this embodiment, the second terminal device is a receiving terminal device configured to receive sidelink data, and the first terminal device is a sending terminal device configured to send sidelink data.

If the second terminal device determines that there are a plurality of sending terminal devices that currently establish communication links to the second terminal device, the plurality of sending terminal devices include the first terminal device. In a case, if sending terminal devices that use a same time-frequency resource to send sidelink data to the second terminal device exist in the plurality of sending terminal devices, the second terminal device may send resource configuration information to each of the plurality of sending terminal devices, so that time-frequency resources used by the plurality of sending terminal devices to send sidelink data to the second terminal device are different. In another case, after receiving sidelink data sent by the plurality of sending terminal devices, the second terminal device needs to perform HARQ-ACK feedback to the plurality of sending terminal devices (sending an ACK or a NACK). If the second terminal device simultaneously feeds back acknowledgment information to the plurality of sending terminal devices, the plurality of sending terminal devices may not correctly receive the acknowledgment information sent by the second terminal device due to limited power of the second terminal device. Therefore, the second terminal device may send resource configuration information to each of the plurality of sending terminal devices. In this case, through control of time domain resources used by the plurality of sending terminal devices to send the sidelink data to the second terminal device, the second terminal device is enabled to feed back, on a same time domain resource, acknowledgment information for data of a relatively small quantity of sending terminal devices. It may be understood that the second terminal device sends different resource configuration information to the plurality of sending terminal devices.

The resource configuration information may be used to indicate a position of a first time domain resource. In this case, a form of the resource configuration information is any one of the following forms.

Form 1: The resource configuration information includes a first time domain resource index and a quantity M of indexes, where the first time domain resource index is used to indicate at least one time unit used to send the sidelink data to the second terminal device, the quantity M of indexes is a quantity of a plurality of time domain resource indexes maintained by the second terminal device, the plurality of time domain resource indexes include the first time domain resource index, and M is an integer greater than or equal to 2.

In other words, the second terminal device maintains M time domain resource indexes, and each sending terminal device that establishes a communication link to the second terminal device corresponds to one or more of the M time domain resource indexes. The time domain resource index corresponding to the sending terminal device is used to indicate a time unit used by the sending terminal device to send sidelink data to the second terminal device. Therefore, if a quantity of sending terminal devices that establish communication links to the second terminal device is P, M needs to be greater than or equal to P. The M time domain resource indexes may be 0, 1, ..., and M-1.

The first terminal device is a sending terminal device that establishes a communication link to the second terminal device, the first terminal device corresponds to the first time domain resource index in the M time domain resource indexes, and there may be one or more first time domain resource indexes. The first time domain resource index is used to indicate a time unit used by the first terminal device to send the sidelink data to the second terminal device.

It may be understood that, the second terminal device may send different time domain resource indexes to different sending terminal devices, so that a conflict between time domain resources used when a plurality of sending terminal devices send sidelink data to the second terminal device is avoided, a probability that the second terminal device cannot receive the sidelink data sent by the first terminal device is reduced, and a probability that the first terminal device cannot receive acknowledgment information fed back by the second terminal device for the sidelink data sent by the first terminal device is reduced.

Form 2: The resource configuration information includes a bitmap corresponding to the first time domain resource.

For example, a bitmap 1001 indicates that the first terminal device has two occasions, in every four slots, for sending sidelink data to the second terminal device. That is, the first terminal device may send sidelink data to the second terminal device in slots with slot numbers 0, 3, 4, 7, ....

It may be understood that, the second terminal device may send, to different sending terminal devices, different bitmaps used to indicate time domain resources, so that a conflict between time domain resources used when a plurality of sending terminal devices send sidelink data to the second terminal device is avoided, and a probability that the first terminal device cannot receive acknowledgment information fed back by the second terminal device for the sidelink data sent by the first terminal device is reduced.

Form 3: The resource configuration information includes an index of a bitmap corresponding to the first time domain resource.

Specifically, each bitmap used to indicate a time domain resource corresponds to one index, and the resource configuration information sent by the second terminal device to the first terminal device includes an index of a bitmap corresponding to the first time domain resource.

It may be understood that, the second terminal device may send, to different sending terminal devices, different indexes of bitmaps used to indicate positions of time domain resources, so that a conflict between time domain resources used when a plurality of sending terminal devices send sidelink data to the second terminal device is avoided, and a probability that the first terminal device cannot receive acknowledgment information fed back by the second terminal device for the sidelink data sent by the first terminal device is reduced.

The resource configuration information may further indicate a part of one or more frequency domain resources used by the first terminal device to send the sidelink data to the second terminal device. For example, the resource configuration information may include indication information of a start frequency domain resource corresponding to the first terminal device. In an implementation, start frequency domain resources corresponding to a plurality of sending terminal devices that establish communication links to the second terminal device may be the same.

Specifically, the start frequency domain resource corresponding to the first terminal device is a start frequency domain resource in the one or more frequency domain resources used by the first terminal device to send the sidelink data to the second terminal device. In a manner, if a resource pool corresponds to six subchannels, the indication information of the start frequency domain resource corresponding to the first terminal device may be an index of a subchannel in the resource pool, and a frequency domain resource occupied by the subchannel is the start frequency domain resource corresponding to the first terminal device.

Further, the resource configuration information may be used to indicate a first frequency domain resource. In this case, a first resource includes the first frequency domain resource and the first time domain resource. Correspondingly, the resource configuration information may include any one of the following information: a bitmap corresponding to the first frequency domain resource, or an index of a bitmap corresponding to the first frequency domain resource.

The following describes the bitmap corresponding to the first frequency domain resource. For example, a bitmap 1100 indicates that the first terminal device may send data to the second terminal device by using a frequency domain resource corresponding to two subchannels in each slot that can be used to send data. That is, the first terminal device may send sidelink data to the second terminal device by using a frequency domain resource of subchannels with an index 0 and an index 1 in a slot that can be used to send data.

When positions of first time domain resources indicated by resource configuration information sent by the second terminal device to different sending terminal devices that establish communication links to the second terminal device are different, and the resource configuration information includes a bitmap corresponding to a frequency domain resource, bitmaps corresponding to frequency domain resources included in different resource configuration information may be the same or may be different.

The following describes the index of the bitmap corresponding to the first frequency domain resource. Each bitmap used to indicate a frequency domain resource corresponds to one index, and the resource configuration information sent by the second terminal device to the first terminal device includes the index of the bitmap corresponding to the first frequency domain resource.

When positions of first time domain resources indicated by resource configuration information sent by the second terminal device to different sending terminal devices that establish communication links to the second terminal device are different, and the resource configuration information includes an index of a bitmap corresponding to a frequency domain resource, indexes of bitmaps corresponding to frequency domain resources included in different resource configuration information may be the same or may be different.

In conclusion, the resource configuration information is used to indicate the position of the first time domain resource and/or the first frequency domain resource. When the resource configuration information is used to indicate the position of the first time domain resource and the first frequency domain resource, information indicating the position of the first time domain resource and information indicating the first frequency domain resource may be a same piece of information, or may be two pieces of independent information.

For example, the resource configuration information includes a bitmap 1100 corresponding to the first frequency domain resource and a bitmap 1001 corresponding to the first time domain resource. Alternatively, a bitmap 1100 corresponding to the first frequency domain resource and a bitmap 1001 corresponding to the first time domain resource correspond to a common index, and the resource configuration information includes the common index. Alternatively, the resource configuration information includes a bitmap 1001, and the bitmap 1001 indicates both the first time domain resource and the first frequency domain resource. In this case, information indicated by the bitmap 1001 may be: The first terminal device may send sidelink data to the second terminal device in slots with slot numbers 0, 3, 4, 7, .... To be specific, the first terminal device may send sidelink data to the second terminal device by using a frequency domain resource of a subchannel with an index 0 in slots with slot numbers 0 and 3; the first terminal device may send sidelink data to the second terminal device by using a frequency domain resource of a subchannel with an index 3 in slots with slot numbers 4 and 7; the first terminal device may send sidelink data to the second terminal device by using a frequency domain resource of a subchannel with an index 0 in slots with slot numbers 8 and 11; the first terminal device may send sidelink data to the second terminal device by using a frequency domain resource of a subchannel with an index 3 in slots with slot numbers 12 and 15; and the rest can be deduced by analogy.

Step S102: The first terminal device determines the first time domain resource based on the resource configuration information.

Specifically, after receiving the resource configuration information from the second terminal device, the first terminal device determines the first time domain resource based on the resource configuration information.

The following describes several cases of determining the first time domain resource based on the resource configuration information.

Case 1: When the resource configuration information includes the first time domain resource index and the quantity M of indexes, that the first terminal device determines the first time domain resource based on the resource configuration information may include: The first terminal device determines the first time domain resource based on the first time domain resource index, the quantity M of indexes, K, and L. A feedback channel resource periodicity is K time units or one time unit including a feedback channel resource exists at an interval of K-1 time units, and L is a minimum time unit interval between a time unit occupied by a data channel and a time unit occupied by a corresponding feedback channel. If a transmit end sends first data on a data channel, a receive end sends acknowledgment information of the first data to the transmit end on a feedback channel, where the data channel corresponds to the feedback channel. K and L may be sent by a network device to the first terminal device, or may be preconfigured.

Specifically, the first terminal device may obtain, according to a formula 1, an index of a time unit used by the first terminal device to send the sidelink data:

$$\mod(\lfloor (n-(K-L))/K \rfloor, M) = \text{Tx} \quad \text{Formula 1}$$

n is the index of the time unit used by the first terminal device to send the sidelink data, Tx is the first time domain resource index corresponding to the first terminal device, [] is an operation used to obtain a maximum integer less than or equal to a given number, and mod() is a modulo operation. It should be noted that when a quantity of first time-frequency resource indexes is greater than 1, each time domain resource index needs to be substituted into the formula 1 for calculation, to obtain indexes of time units used by the first terminal device to send the sidelink data to the second terminal device. When the time unit is a slot, the index of the time unit used by the first terminal device to send the sidelink data is a system slot number.

When the time unit is a slot, several examples are used below to describe a process in which the first terminal device obtains the first time domain resource in the case 1.

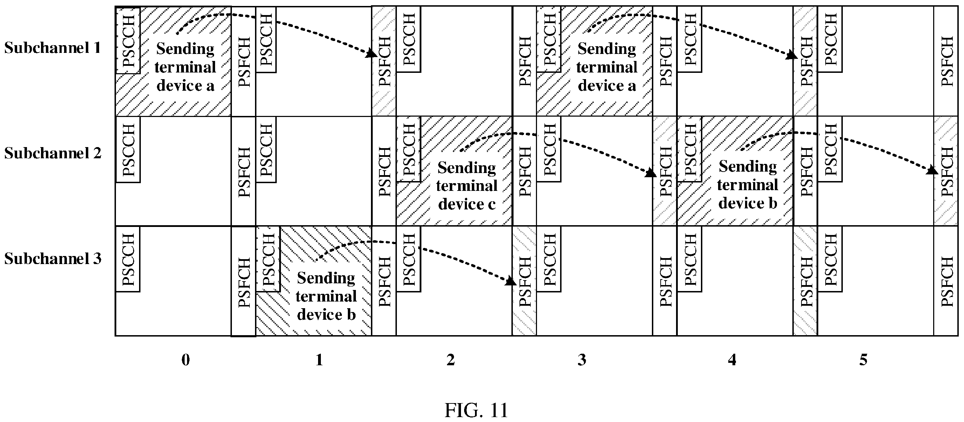

FIG. 11 is a first schematic diagram of a data channel according to an embodiment of this application.

Example 1: With reference to FIG. 11, K=1, that is, a feedback channel resource periodicity is one slot and a feedback channel resource is configured for each slot; L=1. A receiving terminal device simultaneously has three unicast links, that is, the receiving terminal device simultaneously establishes communication links to three sending terminal devices. The three terminal devices all need to send sidelink data to the receiving terminal device, and each of the three sending terminal devices corresponds to one time domain resource index. M time domain resource indexes maintained by the receiving terminal device are respectively 0, 1, and 2, and M=3. In the three sending terminal devices, a sending terminal device a corresponds to a time domain resource index 0, a sending terminal device b corresponds to a time domain resource index 1, and a sending terminal device c corresponds to a time domain resource index 2. It may be understood that the receiving terminal device in this example may be the second terminal device, and the first terminal device may be any one of the sending terminal devices a, b, and c.

The sending terminal device a obtains, based on $\text{mod}([(n-(K-L))/K], M)=0$, a number of a slot used to send sidelink data to the receiving terminal device, that is, obtains slot numbers that satisfy $\text{mod}(n, 3)=0$, including 0, 3, 6, 9, .... The sending terminal device b obtains, based on $\text{mod}([(n-(K-L))/K], M)=1$, a number of a slot used to send sidelink data to the receiving terminal device, that is, obtains slot numbers that satisfy $\text{mod}(n, 3)=1$, including 1, 4, 7, 10, .... The sending terminal device c obtains, based on $\text{mod}([(n-(K-L))/K], M)=2$, a number of a slot used to send sidelink data to the receiving terminal device, that is, obtains slot numbers that satisfy $\text{mod}(n, 3)=2$, including 2, 5, 8, 11, ....

It can be learned that in the case of the example 1, a plurality of sending terminal devices that establish communication links to the receiving terminal device alternately obtain slots for sending sidelink data to the receiving terminal device, so that a conflict between time domain resources used when the plurality of sending terminal devices send the sidelink data to the receiving terminal device is avoided.

In addition, the plurality of sending terminal devices that establish the communication links to the receiving terminal device alternately send the sidelink data to the receiving terminal device, so that the receiving terminal device only needs to perform, on a feedback channel resource corresponding to each slot, HARQ-ACK feedback for sidelink data sent by one sending terminal device. In other words, a quantity of sending terminal devices to which the second terminal device needs to perform HARQ-ACK feedback on a same feedback channel resource is reduced, and a probability that the sending terminal devices can receive acknowledgment information fed back by the second terminal device is improved. That is, a problem, happened when the receiving terminal device simultaneously performs HARQ-ACK feedback to a plurality of sending terminal devices, that at least a part of sending terminal devices cannot receive, due to limited power of the receiving terminal device, acknowledgment information sent by the receiving terminal device when the receiving terminal device performs the HARQ-ACK feedback is resolved.

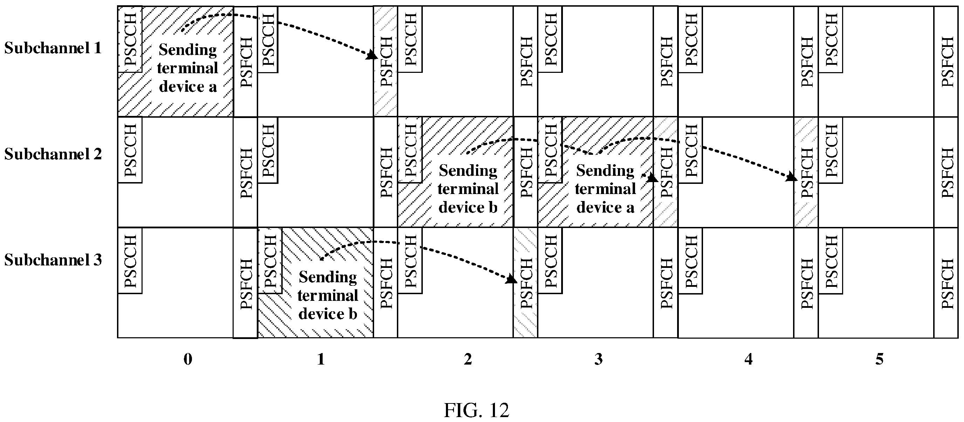

FIG. 12 is a second schematic diagram of a data channel according to an embodiment of this application.

Example 2: With reference to FIG. 12, K=1, that is, a feedback channel resource periodicity is one slot and a feedback channel resource is configured for each slot; L=1. A receiving terminal device simultaneously has two unicast links, that is, the receiving terminal device simultaneously establishes communication links to two sending terminal devices. The two sending terminal devices both need to send sidelink data to the receiving terminal device, and each of the two sending terminal devices corresponds to a time domain resource index. M time domain resource indexes maintained by the receiving terminal device are respectively 0, 1, and 2, and M=3; L=1. In the two sending terminal devices, a sending terminal device a corresponds to a time domain resource index 0, and a sending terminal device b corresponds to a time domain resource index 1 and a time domain resource index 2. It may be understood that the receiving terminal device in this example may be the second terminal device, and the first terminal device may be any one of the sending terminal devices a and b.

The sending terminal device a obtains, based on $\text{mod}([(n-(K-L))/K], M)=0$, a number of a slot used to send sidelink data to the receiving terminal device, that is, obtains slot numbers that satisfy $\text{mod}(n, 3)=0$, including 0, 3, 6, 9, .... The sending terminal device b obtains, based on $\text{mod}([(n-(K-L))/K], M)=1$ and $\text{mod}([(n-(K-L))/K], M)=2$, a number of a slot used to send sidelink data to the receiving terminal device, that is, obtains slot numbers that satisfy $\text{mod}(n, 3)=1$ and slot numbers that satisfy $\text{mod}(n, 3)=2$, including 1, 4, 7, 10, ... and 2, 5, 8, 11, ....

In the example 2, the sending terminal device b corresponds to two time domain resource indexes. Therefore, the sending terminal device b may send sidelink data to the receiving terminal device in a relatively large quantity of slots. In other words, if a communication service between the sending terminal device and the receiving terminal device requires a high transmission rate and a high throughput, at least two time domain resource indexes may be configured for the sending terminal device, to satisfy requirements of the sending terminal device for a high transmission rate and a high throughput.

In the example 2, a conflict between time-frequency resources used when a plurality of sending terminal devices send sidelink data to the receiving terminal device is avoided, a quantity of sending terminal devices to which the second terminal device needs to perform HARQ-ACK feedback on a same feedback channel resource can be reduced, and a probability that the sending terminal devices can receive acknowledgment information fed back by the second terminal device can be improved.

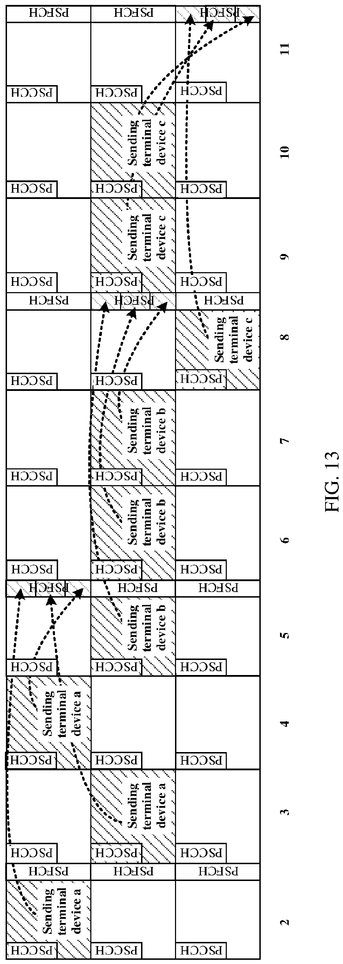

FIG. 13 is a third schematic diagram of a data channel according to an embodiment of this application.

Example 3: With reference to FIG. 13, K=3, that is, a feedback channel resource periodicity is three slots and a feedback channel resource is configured for one of every three slots; L=1. A receiving terminal device simultaneously has three unicast links, that is, the receiving terminal device simultaneously establishes communication links to three sending terminal devices. The three sending terminal devices all need to send sidelink data to the receiving terminal device, and each of the two sending terminal devices corresponds to one time domain resource index. M time domain resource indexes maintained by the receiving terminal device are respectively 0, 1, and 2, and M=3; L=1. In the three sending terminal devices, a sending terminal device a corresponds to a time domain resource index 0, a sending terminal device b corresponds to a time domain resource index 1, and a sending terminal device c corresponds to a time domain resource index 2. It may be understood that the receiving terminal device in this example may be the second terminal device, and the first terminal device may be any one of the sending terminal devices a, b, and c.

The sending terminal device a obtains, based on $\mod([(n-(K-L))/K], M)=0$, a number of a slot used to send sidelink data to the receiving terminal device, that is, obtains slot numbers that satisfy $\mod([(n-2)/3], 3)=0$, including 2, 3, 4, 11, 12, 13, .... The sending terminal device b obtains, based on $\mod([(n-(K-L))/K], M)=1$, a number of a slot used to send sidelink data to the receiving terminal device, that is, obtains slot numbers that satisfy $\mod([(n-2)/3], 3)=1$, including 5, 6, 7, 14, 15, 16, .... The sending terminal device c obtains, based on $\mod([(n-(K-L))/K], M)=2$, a number of a slot used to send sidelink data to the receiving terminal device, that is, obtains slot numbers that satisfy $\mod([(n-2)/3], 3)=2$, including 8, 9, 10, 17, 18, 19, ....

In the case of the example 3, K=3, that is, the feedback channel resource periodicity occupies more than one time unit, that is, three time units. Therefore, each of a plurality of sending terminal devices that establish communication links to the receiving terminal device obtains an opportunity to send sidelink data to the receiving terminal device in three consecutive slots.

In the example 3, based on the same reason, a conflict between time-frequency resources used when the plurality of sending terminal devices send sidelink data to the receiving terminal device is avoided, a quantity of sending terminal devices to which the second terminal device needs to perform HARQ-ACK feedback on a same feedback channel resource can be reduced, and a probability that the sending terminal devices can receive acknowledgment information fed back by the second terminal device can be improved.

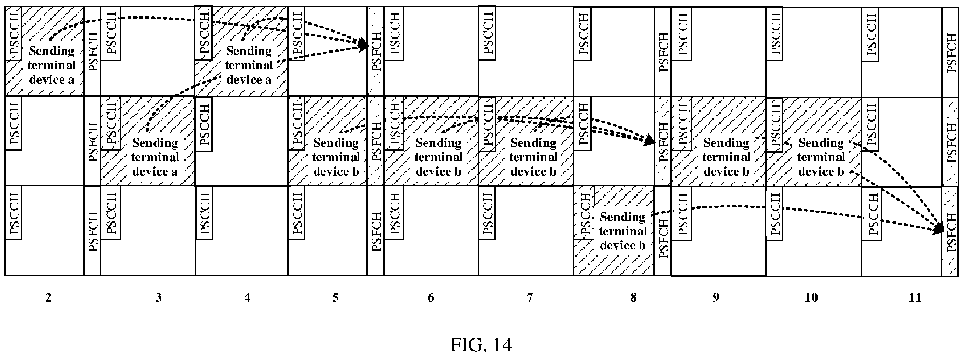

FIG. 14 is a fourth schematic diagram of a data channel according to an embodiment of this application.

Example 4: With reference to FIG. 14, K=3, that is, a feedback channel resource periodicity is three slots and a feedback channel resource is configured for one of every three slots; L=1. A receiving terminal device simultaneously has two unicast links, that is, the receiving terminal device simultaneously establishes communication links to two sending terminal devices. The two sending terminal devices both need to send sidelink data to the receiving terminal device, and each of the two sending terminal devices corresponds to one time domain resource index. M time domain resource indexes maintained by the receiving terminal device are respectively 0, 1, and 2, and M=3. In the three sending terminal devices, a sending terminal device a corresponds to a time domain resource index 0, and a sending terminal device b corresponds to a time domain resource index 1 and a time domain resource index 2. It may be understood that the receiving terminal device in this example may be the second terminal device, and the first terminal device may be any one of the sending terminal devices a and b.

The sending terminal device a obtains, based on $\mod([(n-(K-L))/K], M)=0$, a number of a slot used to send sidelink data to the receiving terminal device, that is, obtains slot numbers that satisfy $\mod([(n-2)/3], 3)=0$, including 2, 3, 4, 11, 12, 13, .... The sending terminal device b obtains, based on $\mod([(n-(K-L))/K], M)=1$ and $\mod([(n-(K-L))/K], M)=2$, a number of a slot used to send sidelink data to the receiving terminal device, that is, obtains slot numbers that satisfy $\mod([(n-2)/3], 3)=1$ and slot numbers that satisfy $\mod([(n-2)/3], 3)=2$, including 5, 6, 7, 14, 15, 16, ... and 8, 9, 10, 17, 18, 19, ....

In the example 4, the sending terminal device b corresponds to two time domain resource indexes. Therefore, the sending terminal device b may send sidelink data to the receiving terminal device in a relatively large quantity of slots. In other words, if a communication service between the sending terminal device and the receiving terminal device requires a high transmission rate and a high throughput, at least two time domain resource indexes may be configured for the sending terminal device, to satisfy requirements of the sending terminal device for a high transmission rate and a high throughput.

In the example 4, based on the same reason, a conflict between time-frequency resources used when a plurality of sending terminal devices send sidelink data to the receiving terminal device is avoided, and a problem, happened when the receiving terminal device simultaneously performs HARQ-ACK feedback to a plurality of sending terminal devices, that at least a part of sending terminal devices cannot receive, due to limited power of the receiving terminal device, acknowledgment information sent by the receiving terminal device when the receiving terminal device performs the HARQ-ACK feedback is resolved.

As described in the foregoing examples, according to the method, corresponding to the case 1, of obtaining the time domain resource of the first terminal device, time domain resources corresponding to sending terminal devices that send sidelink data to the receiving terminal device may be different, so that a conflict between time-frequency resources used when a plurality of sending terminal devices to send sidelink data to the receiving terminal device is avoided. Further, a quantity of sending terminal devices to which the second terminal device needs to perform HARQ-ACK feedback on a same feedback channel resource can be reduced, and a probability that the sending terminal devices can receive acknowledgment information fed back by the second terminal device can be improved.

Case 2: The resource configuration information includes the first time domain resource index and the quantity M of indexes. In this case, that the first terminal device determines the first time domain resource based on

on the resource configuration information includes: The first terminal device determines the first time domain resource based on the first time domain resource index, the quantity M of indexes, K, $K_1$, and L. $K_1$ is a value less than K and greater than or equal to 1. $K_1$ may be sent by a network device to the first terminal device, or may be preconfigured.

Specifically, the first terminal device may obtain, according to a formula 2, an index of a time unit used by the first terminal device to send the sidelink data:

$$\mathrm{mod}(\lfloor(n-(K-L))/K_1\rfloor, M)=\mathrm{Tx} \quad \text{Formula 2}$$

n is the index of the time unit used by the first terminal device to send the sidelink data, Tx is the first time domain resource index corresponding to the first terminal device, [] is an operation used to obtain a maximum integer less than or equal to a given number, and mod() is a modulo operation. It should be noted that when a quantity of first time-frequency resource indexes is greater than 1, each time domain resource index needs to be substituted into the formula 1 for calculation, to obtain indexes of time units used by the first terminal device to send the sidelink data to the second terminal device.

When the time unit is a slot, an example is used below to describe a process in which the first terminal device obtains the first time domain resource in the case 2.

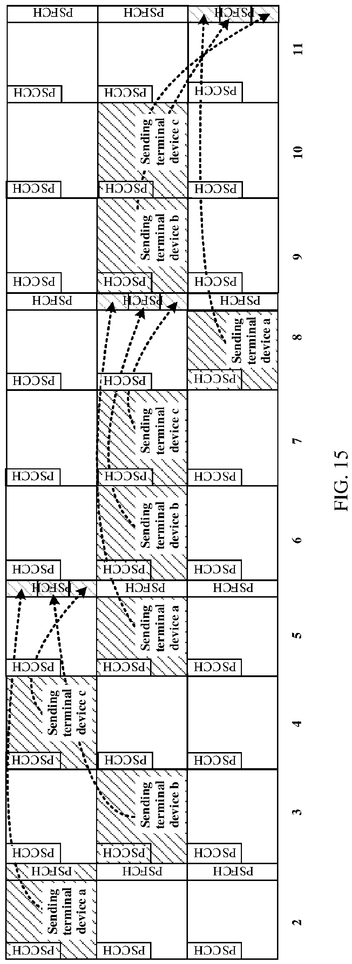

FIG. 15 is a fifth schematic diagram of a data channel according to an embodiment of this application.

With reference to FIG. 15, K=3, that is, a feedback channel resource periodicity is three slots and one slot configured with a feedback channel resource exists every three slots; $K_1$=1 and L=1. A receiving terminal device simultaneously has three unicast links, that is, the receiving terminal device simultaneously establishes communication links to three sending terminal devices. The three terminal devices all need to send sidelink data to the receiving terminal device, and each of the three sending terminal devices corresponds to one time domain resource index. M time domain resource indexes maintained by the receiving terminal device are respectively 0, 1, and 2, and M=3. In the three sending terminal devices, a sending terminal device a corresponds to a time domain resource index 0, a sending terminal device b corresponds to a time domain resource index 1, and a sending terminal device c corresponds to a time domain resource index 2. It may be understood that the first terminal device may be any one of the sending terminal devices a, b, and c.

The sending terminal device a obtains, based on mod($\lfloor(n-(K-L))/K_1\rfloor$, M)=0, a number of a slot used to send sidelink data to the receiving terminal device, that is, obtains slot numbers that satisfy mod(n-2, 3)=0, including 2, 5, 8, 11, .... The sending terminal device b obtains, based on mod($\lfloor(n-(K-L))/K_1\rfloor$, M)=1, a number of a slot used to send sidelink data to the receiving terminal device, that is, obtains slot numbers that satisfy mod(n-2, 3)=1, including 3, 6, 9, 12, .... The sending terminal device c obtains, based on mod($\lfloor(n-2-(K-L))/K_1\rfloor$, M)=2, a number of a slot used to send sidelink data to the receiving terminal device, that is, obtains slot numbers that satisfy mod(n-2, 3)=2, including 4, 7, 10, 13, ....

It can be learned that, in the example 2, there may be K sending terminal devices that send data to the receiving terminal device in K consecutive time units (when $K_1$=1). Compared with the case 1 in which there may be only one terminal device that sends data to the receiving terminal device in K consecutive times units, a transmission delay of the sending terminal device can be reduced.

That is, according to the method, corresponding to the case 2, of obtaining the time domain resource of the first terminal device, a conflict between time-frequency resources used when a plurality of sending terminal devices send sidelink data to the receiving terminal device can be avoided, a quantity of sending terminal devices to which the second terminal device needs to feedback acknowledge messages on a same feedback channel resource can be reduced, a probability that the sending terminal devices can receive the acknowledgment information fed back by the second terminal device can be improved, and a transmission delay of the sending terminal device can be reduced.

Case 3: The resource configuration information includes the bitmap corresponding to the first time domain resource. Specifically, that the first terminal device determines the first time domain resource based on the resource configuration information includes: The first terminal device determines the first time domain resource based on the bitmap corresponding to the first time domain resource.

The bitmap may directly indicate the position of the first time domain resource, and the first terminal device does not need to obtain the first frequency domain resource through calculation. Therefore, in the case 3, complexity of obtaining the first time domain resource by the first terminal device can be reduced, and therefore power consumption of the first terminal device can be reduced.

Case 4: The resource configuration information includes the index of the bitmap corresponding to the first time domain resource. Specifically, that the first terminal device determines the first time domain resource based on the resource configuration information includes: The first terminal device determines the first time domain resource based on the index of the bitmap corresponding to the first time domain resource. For a specific form of the bitmap, refer to descriptions in step S101. Details are not described herein again.

The index of the bitmap may directly indicate the bitmap, the bitmap may directly indicate the position of the first time domain resource, and the first terminal device does not need to obtain the first frequency domain resource through calculation. Therefore, in the case 4, complexity of obtaining the first time domain resource by the first terminal device can be reduced, and therefore power consumption of the first terminal device can be reduced.

When sending the sidelink data to the second terminal device, the first terminal device not only needs to determine the first time domain resource for sending the sidelink data, but also needs to determine the first frequency domain resource for sending the sidelink data. The following continues to describe several cases of determining the first frequency domain resource by the first terminal device.

Case 1: When the resource configuration information cannot indicate the first frequency domain resource, the first terminal device may obtain, based on scheduling performed by the network device, the first frequency domain resource for sending the sidelink data to the second terminal device (corresponding to the foregoing mode 1), or the first terminal device selects, from a resource pool, the first frequency domain resource for sending the sidelink data to the second terminal device (corresponding to the foregoing mode 2).

Case 2: When the resource configuration information can indicate a part of the first frequency domain resource, the first terminal device may determine the part of the first frequency domain resource based on the resource configuration information.

In this case, the resource configuration information includes the indication information of the start frequency domain resource of the first frequency domain resource. In this case, the first terminal device determines the start frequency domain resource of the first frequency domain resource based on the resource configuration information. Another frequency domain resource other than the start frequency domain resource in the first frequency domain resource may be scheduled by the network device or selected by the first terminal device from a resource pool.

If start frequency domain resources of a plurality of sending terminal devices that establish communication links to a receiving terminal device are the same, impact on performance of the sending terminal device when the sending terminal device receives acknowledgment information from the receiving terminal device can be reduced.

In the case 1, a method for determining the first time domain resource by the first terminal device based on the resource configuration information may be the corresponding method for determining a first time-frequency resource in any one of the foregoing cases. The following describes this case with reference to the accompanying drawings.

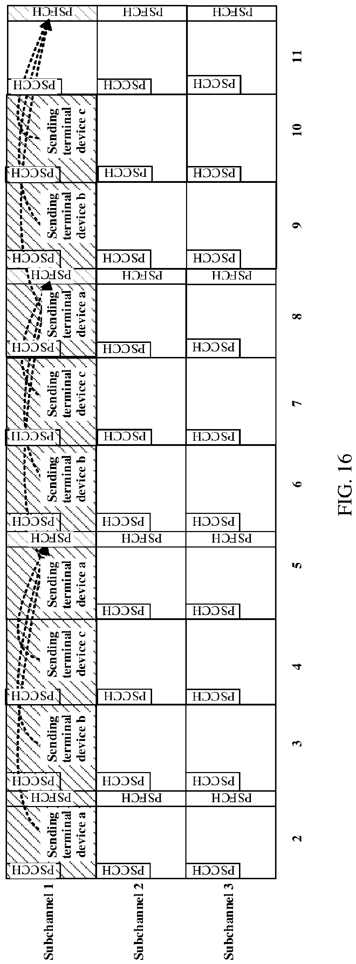

FIG. 16 is a sixth schematic diagram of a data channel according to an embodiment of this application.

With reference to FIG. 16, a time domain resource used by a sending terminal device a in FIG. 16 to send sidelink data is determined by the sending terminal device a based on a time domain resource index (0) of the sending terminal device a, a quantity $M(3)$ of indexes, $K(3)$, $K_1(1)$, and $L(1)$. A time domain resource used by a sending terminal device b to send sidelink data is determined by the sending terminal device b based on a time domain resource index (1) of the sending terminal device b, the quantity $M(3)$ of indexes, $K(3)$, $K_1(1)$, and $L(1)$. A time domain resource used by a sending terminal device c to send sidelink data is determined by the sending terminal device c based on a time domain resource index (2) of the sending terminal device c, the quantity $M(3)$ of indexes, $K_1(1)$, and $L(1)$. Start time domain resources used by the sending terminal device a, the sending terminal device b, and the sending terminal device c to send sidelink data are the same.

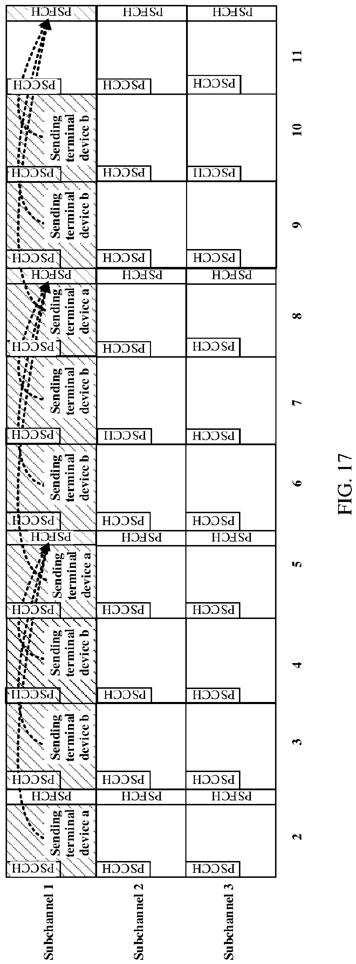

FIG. 17 is a seventh schematic diagram of a data channel according to an embodiment of this application.

With reference to FIG. 17, a time domain resource used by a sending terminal device a in FIG. 17 to send sidelink data is determined by the sending terminal device a based on a time domain resource index (0) of the sending terminal device a, a quantity $M(3)$ of indexes, $K_1(1)$, and $L(1)$. A time domain resource used by a sending terminal device b to send sidelink data is determined by the sending terminal device b based on time domain resource indexes (1 and 2) of the sending terminal device b, the quantity $M(3)$ of indexes, $K_1(1)$, and $L(1)$. Start time domain resources used by the sending terminal device a and the sending terminal device b to send sidelink data are the same.

Case 3: When the resource configuration information can indicate the first frequency domain resource, the first terminal device may determine the first frequency domain resource based on the resource configuration information.

When the resource configuration information includes the bitmap corresponding to the first frequency domain resource, that the first terminal device determines the first frequency domain resource based on the resource configuration information includes: The first terminal device determines the first frequency domain resource based on the bitmap corresponding to the first frequency domain resource.

In this case, a method for determining the first time domain resource by the first terminal device based on the resource configuration information may be the corresponding method for determining a first time-frequency resource in any one of the foregoing cases.

The bitmap may directly indicate a position of the first frequency domain resource, and the network device does not need to schedule the first frequency domain resource or the first terminal device does not need to select the first frequency domain resource from a resource pool. Therefore, when the resource configuration information includes the bitmap corresponding to the first frequency domain resource, complexity of obtaining the first frequency domain resource by the first terminal device can be reduced, and therefore power consumption of the first terminal device can be reduced.

When the resource configuration information includes the index of the bitmap corresponding to the first frequency domain resource, that the first terminal device determines the first frequency domain resource based on the resource configuration information includes: The first terminal device determines the first frequency domain resource based on the index of the bitmap corresponding to the first frequency domain resource.

In this case, a method for determining the first time domain resource by the first terminal device based on the resource configuration information may be the corresponding method for determining a first time-frequency resource in any one of the foregoing cases.

The index of the bitmap may directly indicate the bitmap, the bitmap may directly indicate a position of the first frequency domain resource, and the first terminal device does not need to obtain the first frequency domain resource through calculation. Therefore, when the resource configuration information includes the index of the bitmap corresponding to the first frequency domain resource, complexity of obtaining the first frequency domain resource by the first terminal device can be reduced, and therefore power consumption of the first terminal device can be reduced.

Step S103: The first terminal device sends the sidelink data to the second terminal device on the first resource, and the first resource includes the first time domain resource and the first frequency domain resource.

Specifically, after determining the first time domain resource and the first frequency domain resource that are used to send the sidelink data to the second terminal device, the first terminal device sends the sidelink data to the second terminal device on the first resource including the first time domain resource and the first frequency domain resource.

In this embodiment, the second terminal device configures, for the first terminal device, a resource used by the first terminal device to send the sidelink data, so that a conflict between resources used by the first terminal device and another sending terminal device that sends sidelink data to the second terminal device can be avoided, and therefore a probability that the second terminal device cannot correctly receive data sent by sending terminal devices including the first terminal device can be reduced. Further, a quantity of sending terminal devices to which the second terminal device needs to feed back acknowledgment information on a same feedback channel resource can be reduced, and a probability that the sending terminal devices can receive the acknowledgment information fed back by the second terminal device can be improved.

When one time unit including a feedback channel resource (where the feedback channel resource includes at least one feedback resource unit) exists in every K time units in a time domain resource used by a sending terminal device to send sidelink data to a receiving terminal device, and K is greater than 1, K consecutive time units correspond to a same feedback channel resource. To avoid a conflict between feedback resources respectively corresponding to the K time units, feedback resource units respectively corresponding to the K time units need to be obtained. A feedback resource corresponding to a time unit is a resource that is in the feedback channel resource and that is used to feed back acknowledgment information corresponding to sidelink data sent by the sending terminal device in the time unit. To resolve the foregoing problem, solutions in the following embodiments are provided.

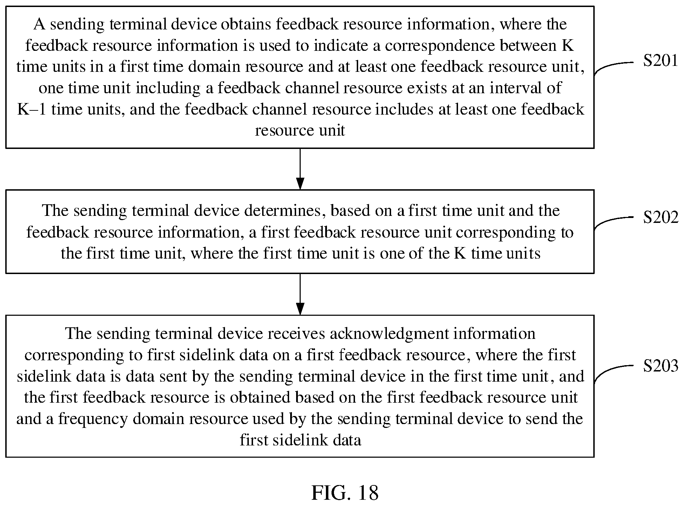

FIG. 18 is a first flowchart of a communication method according to an embodiment of this application. With reference to FIG. 18, the method in this embodiment includes the following steps.

Step S201: A sending terminal device obtains feedback resource information, where the feedback resource information is used to indicate a correspondence between K time units and at least one feedback resource unit. One time unit including a feedback channel resource exists at an interval of K-1 time units, and the feedback channel resource includes at least one feedback resource unit.

Specifically, the sending terminal device in this embodiment is a terminal device configured to send sidelink data to a receiving terminal device, and the sending terminal device in this embodiment may be the first terminal device in the embodiment shown in FIG. 10. The K time units in this embodiment are K time units in a time domain resource used by the sending terminal device to send the sidelink data to the receiving terminal device.

The feedback channel resource includes the at least one feedback resource unit. The feedback resource unit may be a code sequence resource in the feedback channel resource, or may be a PRB occupied by the feedback channel resource.

That the sending terminal device obtains the feedback resource information includes: The sending terminal device receives the feedback resource information from a network device, or the sending terminal device determines the feedback resource information.

In a manner, the feedback resource information is used to indicate a cyclic shift value corresponding to each of the K time units. In a solution, the feedback resource information may include an index of a cyclic shift value group corresponding to each of the K time units, where indexes of K cyclic shift value groups may be 0, 1, ..., and K-1. For example, K=3, and the indexes of the K cyclic shift value groups may be 0, 1, and 2. A cyclic shift value included in each cyclic shift value group may be received from the network device, or may be determined by the sending terminal device based on preconfiguration. In another solution, the feedback resource information may include the cyclic shift value corresponding to each of the K time units. The cyclic shift value is used to generate a code sequence.

In another manner, the feedback resource information is used to indicate a PRB corresponding to each of the K time units. In a solution, the feedback resource information may include an index of a PRB group corresponding to each of the K time units.

Step S202: The sending terminal device determines, based on a first time unit and the feedback resource information, a first feedback resource unit corresponding to the first time unit, where the first time unit is one of the K time units.

Specifically, after obtaining the feedback resource information, the sending terminal device determines, based on the first time unit and the feedback resource information, the first feedback resource unit corresponding to the first time unit.

In a case in which the feedback resource information indicates the cyclic shift value corresponding to each of the K time units:

The sending terminal device determines, based on the feedback resource information and the first time unit, a cyclic shift value corresponding to the first time unit, and may obtain, based on the cyclic shift value, a code sequence (the feedback resource unit corresponding to the first time unit) corresponding to the first time unit.

In a case in which the feedback resource information is used to indicate the PRB corresponding to each of the K time units:

The sending terminal device determines, based on the feedback resource information and the first time unit, a first index of a first PRB group corresponding to the first time unit, where the first index of the first PRB group is used to indicate the first PRB group (the feedback resource unit corresponding to the first time unit) corresponding to the first time unit.

Step S203: The sending terminal device receives acknowledgment information corresponding to first sidelink data on a first feedback resource, where the first sidelink data is data sent by the sending terminal device in the first time unit, and the first feedback resource is obtained based on the first feedback resource unit and a frequency domain resource used by the sending terminal device to send the first sidelink data.

The following describes a process of obtaining the first feedback resource.

In the case in which the feedback resource information indicates the cyclic shift value corresponding to each of the K time units:

The sending terminal device determines, based on the frequency domain resource for sending the first sidelink data in the first time unit, a frequency domain resource occupied by the first feedback resource corresponding to the first time unit. The sending terminal device determines the first feedback resource corresponding to the first time unit in a corresponding feedback channel resource based on the frequency domain resource of the first feedback resource corresponding to the first time unit and the code sequence. For ease of description, the frequency domain resource used by the sending terminal device to send the first sidelink data in the first time unit is subsequently referred to as a first target frequency domain resource.

Further, when the feedback channel resource is a PSFCH resource and a format of the PSFCH is a short format, the frequency domain resource occupied by the first feedback resource corresponding to the first time unit may be the same as the first target frequency domain resource. When the feedback channel resource is a PSFCH resource and a format of the PSFCH is a long format, the frequency domain resource occupied by the first feedback resource corresponding to the first unit is a frequency domain resource occupied by p consecutive PRBs starting from a target PRB in one or more PRBs occupied by the feedback channel resource, where an index of the target PRB is the same as an index of a subchannel corresponding to the first target frequency domain resource, and p is a quantity of subchannels corresponding to the first target frequency domain resource. For details, refer to the foregoing descriptions of the long-format PSFCH.

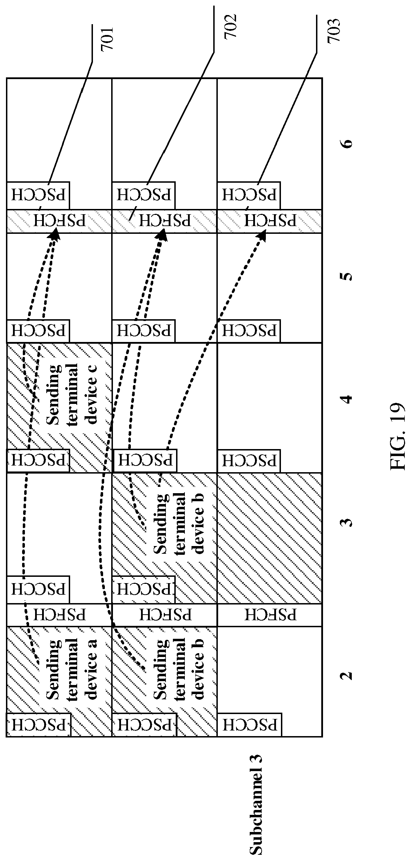

FIG. 19 is a first schematic diagram of a feedback resource configuration according to an embodiment of this application. With reference to FIG. 19, when K=3 and L=1, for three slots 2, 3, and 4, a frequency domain resource used by a sending terminal device a to send sidelink data in the slot 2 corresponds to a subchannel 1, and a frequency domain resource occupied by a feedback resource 701 used by a receiving terminal device to feed back acknowledgment information for the sidelink data is also a frequency domain resource occupied by the subchannel 1. A frequency domain resource used by a sending terminal device b to send sidelink data in the slot 3 corresponds to subchannels 2 and 3, and a frequency domain resource occupied by feedback resources 702 and 703 that are used by the receiving terminal device to feed back acknowledgment information for the sidelink data is also a frequency domain resource occupied by the subchannels 2 and 3. A frequency domain resource used by a sending terminal device c to send sidelink data in the slot 4 corresponds to the subchannel 1, and a frequency domain resource occupied by the feedback resource 701 used by the receiving terminal device to feed back acknowledgment information for the sidelink data is also the subchannel 1. A frequency domain resource used by the sending terminal device b to send sidelink data in the slot 2 corresponds to the subchannel 2, and a frequency domain resource occupied by the feedback resource 702 used by the receiving terminal device to feed back acknowledgment information for the sidelink data is also a frequency domain resource occupied by the subchannel 2.

In the case in which the feedback resource information is used to indicate the PRB corresponding to each of the K time units:

The sending terminal device divides PRBs corresponding to subchannels that correspond to the first target frequency domain resource into K PRB groups.

When the subchannels correspond to J PRBs, each PRB group includes J/K PRBs, and J is an integer greater than 1. One index is allocated to each of the K PRB groups according to a preconfigured rule, and all K indexes of the K PRB groups corresponding to the subchannels are 0, ..., and K-1. A PRB group whose index is the first index in every K PRB groups is the first PRB group corresponding to the first time unit, and a frequency domain resource occupied by the PRB group corresponding to the first time unit is the frequency domain resource occupied by the first feedback resource corresponding to the first time unit. Therefore, the sending terminal device may determine the first feedback resource corresponding to the first time unit in a corresponding feedback channel resource based on the PRB group corresponding to the first time unit. A PRB corresponding to a subchannel is a PRB determined based on a frequency domain resource occupied by the subchannel and a time unit occupied by the corresponding feedback channel resource.

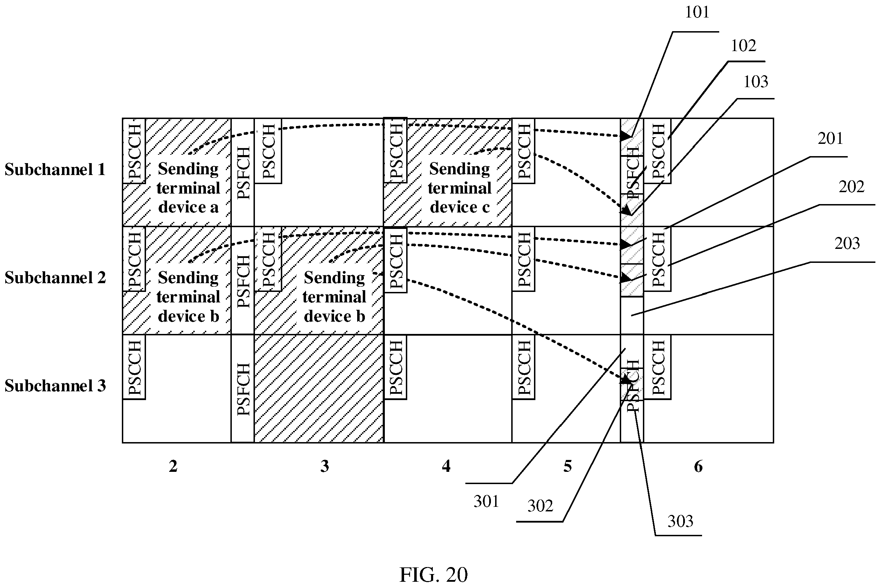

FIG. 20 is a second schematic diagram of a feedback resource configuration according to an embodiment of this application. With reference to FIG. 20, when K=3 and L=1, PRBs corresponding to a subchannel 1 are divided into three PRB groups, and indexes of the three PRB groups are 0, 1, and 2. A frequency domain resource occupied by a feedback resource numbered 101 may be a frequency domain resource occupied by a PRB group whose index is 0 in the three PRB groups, a frequency domain resource occupied by a feedback resource numbered 102 may be a frequency domain resource occupied by a PRB group whose index is 1 in the three PRB groups, and a frequency domain resource occupied by a feedback resource numbered 103 may be a frequency domain resource occupied by a PRB group whose index is 2 in the three PRB groups. PRBs corresponding to a subchannel 2 are divided into three PRB groups, and indexes of the three PRB groups are 0, 1, and 2. A frequency domain resource occupied by a feedback resource numbered 201 may be a frequency domain resource occupied by a PRB group whose index is 0 in the three PRB groups, a frequency domain resource occupied by a feedback resource numbered 202 may be a frequency domain resource occupied by a PRB group whose index is 1 in the three PRB groups, and a frequency domain resource occupied by a feedback resource numbered 203 may be a frequency domain resource occupied by a PRB group whose index is 2 in the three PRB groups. PRBs occupied by a subchannel 3 are divided into three PRB groups, and indexes of the three PRB groups are 0, 1, and 2. A frequency domain resource occupied by a feedback resource numbered 301 may be a frequency domain resource occupied by a PRB group whose index is 0 in the three PRB groups, a frequency domain resource occupied by a feedback resource numbered 302 may be a frequency domain resource occupied by a PRB group whose index is 1 in the three PRB groups, and a frequency domain resource occupied by a feedback resource numbered 303 may be a frequency domain resource occupied by a PRB group whose index is 2 in the three PRB groups.

It is assumed that an index of a PRB group corresponding to the 1st time unit in the K time units is 0, an index of a PRB group corresponding to the 2nd time unit in the K time units is 1, and an index of a PRB group corresponding to the 3rd time unit in the K time units is 2. In this case, for three slots 2, 3, and 4, an index of a PRB group corresponding to the slot 2 is 0, a frequency domain resource used by a sending terminal device a to send data in the slot 2 corresponds to the subchannel 1, and the sending terminal device a receives, on the feedback resource numbered 101, acknowledgment information corresponding to the sidelink data sent by the sending terminal device a in the slot 1. An index of a PRB group corresponding to the slot 3 is 1, a frequency domain resource used by a sending terminal device b to send data in the slot 3 corresponds to subchannels 2 and 3, and the terminal device b receives, on feedback resources numbered 202 and 302, acknowledgment information corresponding to the sidelink data sent by the sending terminal device b in the slot 2. An index of a PRB group corresponding to the slot 4 is 2, a frequency domain resource used by a sending terminal device c to send data in the slot 4 corresponds to the subchannel 1, and the sending terminal device c receives, on the feedback resource numbered 103, acknowledgment information corresponding to the sidelink data sent by the sending terminal device c in the slot 4.

After determining the first feedback resource corresponding to the first time unit, the sending terminal device receives, on the first feedback resource, the acknowledgment information corresponding to the first sidelink data.

Specifically, the sending terminal device sends the first sidelink data to the receiving terminal device in the first time unit. After receiving the first sidelink data, the receiving terminal device sends, on the first feedback resource corresponding to the first time unit, the acknowledgment information corresponding to the first sidelink data. The sending terminal device receives, on the first feedback resource, the acknowledgment information corresponding to the first sidelink data. The receiving terminal device in this embodiment is a terminal device for receiving the sidelink data, and may be the second terminal device in the embodiment shown in FIG. 10.

It may be understood that, there may be one or more receiving terminal devices that send acknowledgment information of the first sidelink data to the sending terminal device in the first time unit, and the sending terminal device receives, on the first feedback resource, the acknowledgment information that corresponds to the first sidelink data and that is sent by the one or more receiving terminal devices.

In this embodiment, with the feedback resource information, feedback resources corresponding to the K time units are different from each other, and a conflict between the feedback resources corresponding to the K time units is avoided.

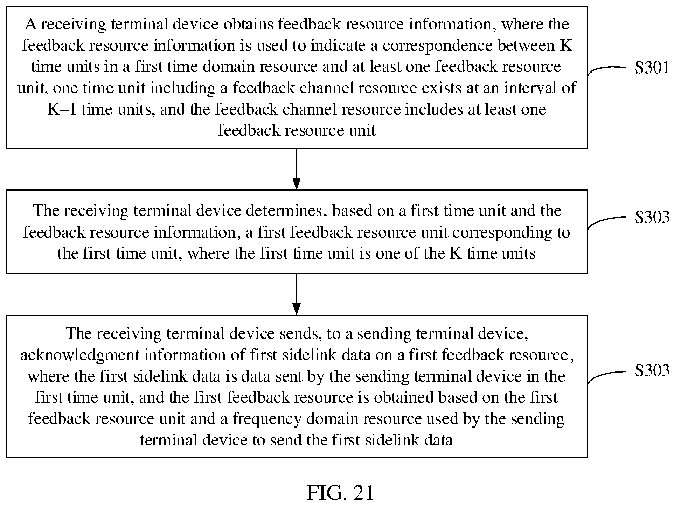

The following describes, with reference to FIG. 21, a method in which a receiving terminal device determines a feedback resource corresponding to a first time unit in K time units. FIG. 21 is a second flowchart of a communication method according to an embodiment of this application. With reference to FIG. 21, the method in this embodiment includes the following steps.

Step S301: A receiving terminal device obtains feedback resource information, where the feedback resource information is used to indicate a correspondence between K time units in a first time domain resource and at least one feedback resource unit. One time unit including a feedback channel resource exists at an interval of K-1 time units, and the feedback channel resource includes at least one feedback resource unit.

Specifically, for specific implementation of this step, refer to specific implementation in step S201. The receiving terminal device in this embodiment is a terminal device for receiving sidelink data, and may be the second terminal device in the embodiment shown in FIG. 10.

Step S302: The receiving terminal device determines, based on a first time unit and the feedback resource information, a first feedback resource unit corresponding to the first time unit, where the first time unit is one of the K time units.

Specifically, for specific implementation of this step, refer to specific implementation in step S202.

Step S303: The receiving terminal device sends, to a sending terminal device, acknowledgment information of first sidelink data on a first feedback resource, where the first sidelink data is data sent by the sending terminal device in the first time unit, and the first feedback resource is obtained based on the first feedback resource unit and a frequency domain resource used by the sending terminal device to send the first sidelink data.

The sending terminal device in this embodiment is a terminal device for sending sidelink data, and may be the first terminal device in the embodiment shown in FIG. 10.

In this embodiment, with the feedback resource information, feedback resources corresponding to the K time units are different from each other, and a conflict between the feedback resources corresponding to the K time units is avoided.

The following describes, by using specific embodiments, a process, in the embodiment shown in FIG. 18, in which the receiving terminal device determines the feedback resource used by the receiving terminal device to send the acknowledgment information corresponding to the first sidelink data, and a process, in the embodiment shown in FIG. 21, in which the sending terminal device determines the feedback resource for receiving the acknowledgment information corresponding to the first sidelink data. The first sidelink data is sidelink data sent by the sending terminal device in the first time unit.

First, for a case in which the feedback resource information is used to indicate the cyclic shift value corresponding to each of the K time units, a process in which the receiving terminal device determines the feedback resource used by the receiving terminal device to send the acknowledgment information corresponding to the first sidelink data is described.

Case 1: Unicast communication is performed between the receiving terminal device and the sending terminal device.

For a short-format PSFCH, a frequency domain resource used by the receiving terminal device to send the acknowledgment information corresponding to the first sidelink data is the first target frequency domain resource, where the first target frequency domain resource is a frequency domain resource used by the sending terminal device to send the first sidelink data in the first time unit.

For a long-format PSFCH, a frequency domain resource used by the receiving terminal device to send the acknowledgment information corresponding to the first sidelink data is a frequency domain resource occupied by p consecutive PRBs starting from a target PRB in one or more PRBs occupied by a feedback channel resource (where for ease of description, "the frequency domain resource occupied by the p consecutive PRBs starting from the target PRB in the one or more PRBs occupied by the feedback channel resource" is subsequently referred to as "a second target frequency domain resource"), where an index of the target PRB is the same as an index of a start subchannel in one or more subchannels corresponding to the first target frequency domain resource, and p is a quantity of subchannels corresponding to the first target frequency domain resource. The PRB occupied by the feedback channel resource is described above.

The receiving terminal device obtains a first cyclic shift value used by the receiving terminal device to send the acknowledgment information corresponding to the first sidelink data, which is subsequently referred to as a first cyclic shift value corresponding to the receiving terminal device for short. In the ACK/NACK mode, there are two first cyclic shift values corresponding to the receiving terminal device, where one first cyclic shift value is used to send an ACK, and the other first cyclic shift value is used to send a NACK. In the ACK-only mode, there is one first cyclic shift value corresponding to the receiving terminal device, where the first cyclic shift value is used to send an ACK. In the NACK-only mode, there is one first cyclic shift value corresponding to the receiving terminal device, where the first cyclic shift value is used to send a NACK.

In a manner, the first cyclic shift value corresponding to the receiving terminal device may be one or two default cyclic shift values in cyclic shift values corresponding to the first time unit. For example, in the ACK/NACK mode, the first cyclic shift value corresponding to the receiving terminal device is by default the 1st cyclic shift value 0 or the 2nd cyclic shift value 1 in the cyclic shift values corresponding to the first time unit.

For example, for the short-format PSFCH, if a frequency domain resource of one subchannel corresponds to a frequency domain resource occupied by six PRBs, there may be 72 cyclic shift values. If K=3, each time unit may correspond to 24 cyclic shift values, where the 1st time unit in the K time units corresponds to cyclic shift values 0 to 23, the 2nd time unit in the K time units corresponds to cyclic shift values 24 to 47, and the 3rd time unit in the K time units corresponds to cyclic shift values 48 to 71. If the first time unit is the 1st time unit in the K time units, in the ACK/NACK mode, cyclic shift values corresponding to the receiving terminal device may be 0 and 1, where 0 is used to send an ACK, and 1 is used to send an ACK. If the first time unit is the 2nd time unit in the K time units, in the ACK/NACK mode, cyclic shift values corresponding to the receiving terminal device may be 24 and 25, where 24 is used to send an ACK, and 25 is used to send an ACK. If the first time unit is the 3rd time unit in the K time units, in the ACK/NACK mode, cyclic shift values corresponding to the receiving terminal device may be 47 and 48, where 47 is used to send an ACK, and 48 is used to send an ACK.

In this case, the receiving terminal device may generate a first code sequence by using the corresponding first cyclic shift value. The feedback resource used by the receiving terminal device to send the acknowledgment information corresponding to the first sidelink data includes the first code sequence, the first target frequency domain resource, and the time unit occupied by the corresponding feedback channel resource.

Correspondingly, the sending terminal device may determine, by using a same method, the feedback resource used by the receiving terminal device to send the acknowledgment information corresponding to the first sidelink data, and receive, on the feedback resource, the acknowledgment information that corresponds to the first sidelink data and that is sent by the receiving terminal device.

In the foregoing case 1, a frequency domain feedback resource may be determined based on a frequency domain resource used to send sidelink data, and an ACK and/or a NACK are/is fed back in a code division manner, so that effective HARQ ACK/NACK feedback is implemented.

Case 2: Unicast communication is performed between the receiving terminal device and the sending terminal device. A frequency domain resource used by the receiving terminal device to send the acknowledgment information corresponding to the first sidelink data occupies a frequency domain resource occupied by one PRB.

For a short-format PSFCH, in a manner, a PRB corresponding to the first target frequency domain resource is a PRB determined based on the first target frequency domain resource and the time unit occupied by the corresponding feedback channel resource, where the first target frequency domain resource is a frequency domain resource used by the sending terminal device to send the first sidelink data in the first time unit. The receiving terminal device may determine that a PRB whose index is a default value in one or more PRBs corresponding to the first target frequency domain resource is a first PRB corresponding to the receiving terminal device, and the first PRB corresponding to the receiving terminal device means that the frequency domain resource used by the receiving terminal device to send the acknowledgment information corresponding to the first sidelink data is a frequency domain resource occupied by the first PRB, where for example, the default value is 0.

For a long-format PSFCH, in a manner, the receiving terminal device may determine that a PRB whose offset value is a default value in p consecutive PRBs starting from a target PRB in one or more PRBs occupied by the feedback channel resource is a first PRB corresponding to the receiving terminal device, where for example, the offset value is 0. An index of the target PRB in the one or more PRBs occupied by the feedback channel resource is the same as an index of a start subchannel in one or more subchannels corresponding to the first target frequency domain resource, and p is a quantity of subchannels corresponding to the first target frequency domain resource. An offset value of a PRB is an offset value of the PRB relative to a start PRB in the one or more PRBs corresponding to a second target frequency domain resource, and the start PRB is the 1st PRB or the last PRB in the one or more PRBs corresponding to the second target frequency domain resource. If the PRB is the same as the start PRB, the offset value of the PRB is 0. If the start PRB is different from the PRB, the offset value of the PRB is equal to 1 plus a quantity of PRBs between the PRB and the start PRB.

The receiving terminal device obtains a first cyclic shift value used by the receiving terminal device to send the acknowledgment information corresponding to the first sidelink data. A specific method is the same as that in the case 1, and details are not described herein again.

For example, for the short-format PSFCH, if the receiving terminal device sends the acknowledgment information corresponding to the first sidelink data by using a PUCCH format 0 in NR, and the frequency domain resource used by the receiving terminal device to send the acknowledgment information corresponding to the first sidelink data occupies a frequency domain resource occupied by one PRB, there may be 12 cyclic shift values. If K=3, each time unit may correspond to four cyclic shift values, where the 1st time unit in the K time units corresponds to cyclic shift values 0 to 3, the 2nd time unit in the K time units corresponds to cyclic shift values 4 to 7, and the 3rd time unit in the K time units corresponds to cyclic shift values 8 to 11. If the first time unit is the 1st time unit in the K time units, in the ACK/NACK mode, cyclic shift values corresponding to the receiving terminal device may be 0 and 1, where 0 is used to send an ACK, and 1 is used to send a NACK. If the first time unit is the

2nd time unit in the K time units, in the ACK/NACK mode, cyclic shift values corresponding to the receiving terminal device may be 4 and 5, where 4 is used to send an ACK, and 5 is used to send a NACK. If the first time unit is the 3rd time unit in the K time units, in the ACK/NACK mode, cyclic shift values corresponding to the receiving terminal device may be 8 and 9, where 8 is used to send an ACK, and 9 is used to send a NACK.

In this example, if the first target frequency domain resource occupies one subchannel, there are six PRBs corresponding to the first target frequency domain resource, and indexes 0, 1, 2, 3, 4, and 5 are respectively allocated to the six PRBs according to a preconfigured rule. When the default value is 0, the first PRB corresponding to the receiving terminal device is by default a PRB whose index is 0.

In this case, the receiving terminal device may generate a first code sequence by using the corresponding first cyclic shift value. The feedback resource used by the receiving terminal device to send the acknowledgment information corresponding to the first sidelink data includes the first code sequence, the frequency domain resource occupied by the first PRB corresponding to the receiving terminal device, and the time unit occupied by the corresponding feedback channel resource.

To prevent loss of receiving performance of the sending terminal device that is caused by an AGC problem caused by an excessively small frequency domain resource occupied by the feedback resource, in this case, the receiving terminal device may determine a second feedback resource based on a frequency domain resource occupied by a second PRB in the one or more PRBs corresponding to the first target frequency domain resource, the first code sequence, and the time unit occupied by the corresponding feedback channel resource, and repeatedly sends the acknowledgment information corresponding to the first sidelink data based on the second feedback resource. The second PRB is a PRB, other than the first PRB corresponding to the receiving terminal device, in the one or more PRBs corresponding to the first target frequency domain resource.

Correspondingly, the sending terminal device may determine, by using a same method, the feedback resource used by the receiving terminal device to send the acknowledgment information corresponding to the first sidelink data, and receive, on the feedback resource, the acknowledgment information that corresponds to the first sidelink data and that is sent by the receiving terminal device.

In the foregoing case 2, a frequency domain feedback resource may be determined based on a frequency domain resource used to send sidelink data, and an ACK and/or a NACK are/is fed back in a code division manner, so that effective HARQ ACK/NACK feedback is implemented.

Case 3: Multicast communication is performed between the sending terminal device and a terminal device that is in a first terminal device group in which the receiving terminal device is located.

For a short-format PSFCH, a frequency domain resource used by each terminal device in the first terminal device group to send acknowledgment information corresponding to the first sidelink data is the first target frequency domain resource. For a long-format PSFCH, a frequency domain resource used by each terminal device in the first terminal device group to send acknowledgment information corresponding to the first sidelink data is a second target frequency domain resource (for a meaning, refer to the meaning in the embodiment shown in FIG. 10).

The receiving terminal device obtains a first cyclic shift value used by the receiving terminal device to send the acknowledgment information corresponding to the first sidelink data. Each terminal device in the first terminal device group may obtain a first cyclic shift value corresponding to the terminal device based on an identifier of the terminal device, a total quantity H of cyclic shift values corresponding to the first time unit, and k, where k=0, 1, ..., or K-1, and the first time unit is a $(k+1)^{th}$ time unit in the K time units. In the ACK/NACK mode, a terminal device whose identifier is $i$ in the first terminal device group may specifically obtain two corresponding first cyclic shift values based on $2 \times i + k \times H$ and $2 \times i + 1 + k \times H$. $2 \times i + k \times H$ may be a cyclic shift value used by the terminal device whose identifier is $i$ in the first terminal device group to send an ACK, and $2 \times i + 1 + k \times H$ may be a cyclic shift value used by the terminal device whose identifier is $i$ in the first terminal device group to send a NACK.

For example, for the short-format PSFCH, if the receiving terminal device sends the acknowledgment information corresponding to the first sidelink data by using a PUCCH format 0 in NR, when the first target frequency domain resource corresponds to a frequency domain resource occupied by six PRBs, there may be 72 cyclic shift values. If K=3, each time unit may correspond to 24 cyclic shift values, where the 1st time unit in the K time units corresponds to cyclic shift values 0 to 23, the 2nd time unit in the K time units corresponds to cyclic shift values 24 to 47, and the 3rd time unit in the K time units corresponds to cyclic shift values 48 to 71. In the ACK/NACK mode, the first terminal device group may include a maximum of 12 terminal devices.

If the first time unit is the 1st time unit in the K time units, in the ACK/NACK mode, cyclic shift values corresponding to a terminal device whose identifier is 0 may be 0 and 1, where 0 is used to send an ACK, and 1 is used to send a NACK; cyclic shift values corresponding to a terminal device whose identifier is 1 may be 2 and 3, where 2 is used to send an ACK, and 3 is used to send a NACK; the rest may be deduced by analogy. If the first time unit is the 2nd time unit in the K time units, in the ACK/NACK mode, cyclic shift values corresponding to a terminal device whose identifier is 0 may be 24 and 25, where 24 is used to send an ACK, and 25 is used to send a NACK; cyclic shift values corresponding to a terminal device whose identifier is 1 may be 26 and 27, where 26 is used to send an ACK, and 27 is used to send a NACK; the rest may be deduced by analogy. If the first time unit is the 3rd time unit in the K time units, in the ACK/NACK mode, cyclic shift values corresponding to a terminal device whose identifier is 0 may be 47 and 48, where 47 is used to send an ACK, and 48 is used to send a NACK; cyclic shift values corresponding to a terminal device whose identifier is 1 may be 49 and 50, where 49 is used to send an ACK, and 50 is used to send a NACK; the rest may be deduced by analogy.

In this case, each terminal device in the first terminal device group may generate a code sequence of the terminal device by using the corresponding cyclic shift value. A feedback resource used by the terminal device to send the acknowledgment information corresponding to the first sidelink data includes the code sequence of the terminal device, the first target frequency domain resource, and the time unit occupied by the corresponding feedback channel resource.

Correspondingly, the sending terminal device may determine, by using a same method, the feedback resource used by each terminal device in the first terminal device group to send the acknowledgment information corresponding to the first sidelink data, and receive, on the feedback resource, the acknowledgment information that corresponds to the first sidelink data and that is sent by each terminal device in the first terminal device group.

In the foregoing case 3, a frequency domain resource of a feedback resource may be determined based on a frequency domain resource used to send sidelink data, and an ACK and/or a NACK are/is fed back in a code division manner, so that effective HARQ ACK/NACK feedback is implemented.

Case 4: Multicast communication is performed between the sending terminal device and a terminal device that is in a first terminal device group in which the receiving terminal device is located. A frequency domain resource used by each terminal device in the first terminal device group to send acknowledgment information corresponding to the first sidelink data occupies a frequency domain resource occupied by one PRB.

For a short-format PSFCH, each terminal device in the first terminal device group may determine, based on an identifier of the terminal device and m, a target index of a PRB corresponding to the terminal device, and determine that a PRB whose index is the target index in one or more PRBs corresponding to the first target frequency domain resource is the PRB corresponding to the terminal device. Specifically, an index of a PRB corresponding to a terminal device whose index is $i$ may be obtained based on [$i/m$]. The PRB corresponding to the first target frequency domain resource is a PRB determined based on the first target frequency domain resource and the time unit occupied by the corresponding feedback channel resource.

For a long-format PSFCH, each terminal device in the first terminal device group may determine, based on an identifier of the terminal device and m, a target offset value of a PRB corresponding to the terminal device, and determine that a PRB whose offset value is the target offset value in p consecutive PRBs starting from a target PRB in one or more PRBs occupied by the feedback channel resource is the PRB corresponding to the terminal device. Specifically, an offset value of a PRB corresponding to a terminal device whose identifier is $i$ may be obtained based on [$i/m$].

The receiving terminal device obtains a first cyclic shift value used by the receiving terminal device to send the acknowledgment information corresponding to the first sidelink data. A specific method and an example are same as those in the case 3, and details are not described herein again.

For example, for the short-format PSFCH, if the receiving terminal device sends the acknowledgment information corresponding to the first sidelink data by using a PUCCH format 0 in NR, when a frequency domain resource used by the receiving terminal device to send the acknowledgment information corresponding to the first sidelink data occupies a frequency domain resource occupied by one PRB, there may be 12 cyclic shift values corresponding to one PRB. If K=3, each time unit may correspond to 4 cyclic shift values, where the 1st time unit in the K time units corresponds to cyclic shift values 0 to 3, the 2nd time unit in the K time units corresponds to cyclic shift values 4 to 7, and the 3rd time unit in the K time units corresponds to cyclic shift values 8 to 11.

If the first time unit is the 1st time unit in the K time units, in the ACK/NACK mode, cyclic shift values corresponding to a terminal device whose identifier is 0 may be 0 and 1, where 0 is used to send an ACK, and 1 is used to send a NACK; cyclic shift values corresponding to a terminal device whose identifier is 1 may be 2 and 3, where 2 is used to send an ACK, and 3 is used to send a NACK; the rest may be deduced by analogy. If the first time unit is the 2nd time unit in the K time units, in the ACK/NACK mode, cyclic shift values corresponding to a terminal device whose identifier is 0 may be 4 and 5, where 4 is used to send an ACK, and 5 is used to send a NACK; cyclic shift values corresponding to a terminal device whose identifier is 1 may be 6 and 7, where 6 is used to send an ACK, and 7 is used to send a NACK; the rest may be deduced by analogy. If the first time unit is the 3rd time unit in the K time units, in the ACK/NACK mode, cyclic shift values corresponding to a terminal device whose identifier is 0 may be 8 and 9, where 8 is used to send an ACK, and 9 is used to send a NACK; cyclic shift values corresponding to a terminal device whose identifier is 1 may be 10 and 11, where 10 is used to send an ACK, and 11 is used to send a NACK; the rest may be deduced by analogy.

In this example, if the first target frequency domain resource occupies one subchannel, there are six PRBs corresponding to the first target frequency domain resource, and indexes 0, 1, 2, 3, 4, and 5 are respectively allocated to the six PRBs according to a preconfigured rule. Because in this example, one time unit corresponds to four cyclic shift values, in the ACK/NACK mode, the quantity m of multiplexed terminal devices is equal to 2. Based on $\lfloor i/m \rfloor$, it can be learned that terminal devices with indexes 0 and 1 in the first terminal device group correspond to a PRB whose index is 0, and terminal devices with identifiers 2 and 3 in the first terminal device group correspond to a PRB whose index is 1. The rest may be deduced by analogy. In this example, in the ACK/NACK mode, the first terminal device group may include a maximum of 12 terminal devices.

For example, for the long-format PSFCH, if the receiving terminal device sends the acknowledgment information corresponding to the first sidelink data by using a PUCCH format 1 in NR, when a frequency domain resource used by the receiving terminal device to send the acknowledgment information corresponding to the first sidelink data occupies a frequency domain resource occupied by one PRB, there may be 72 cyclic shift values. If K=3, each time unit may correspond to 24 cyclic shift values, where the 1st time unit in the K time units corresponds to cyclic shift values 0 to 23, the 2nd time unit in the K time units corresponds to cyclic shift values 24 to 47, and the 3rd time unit in the K time units corresponds to cyclic shift values 48 to 71.

In this case, each terminal device in the first terminal device group may generate a code sequence of the terminal device by using a corresponding cyclic shift value. A feedback resource used by the terminal device to send the acknowledgment information corresponding to the first sidelink data includes the code sequence of the terminal device, a frequency domain resource occupied by a PRB corresponding to the terminal device, and the time unit occupied by the corresponding feedback channel resource.

Correspondingly, the sending terminal device may determine, by using a same method, the feedback resource used by each terminal device in the first terminal device group to send the acknowledgment information corresponding to the first sidelink data, and receive, on the feedback resource, the acknowledgment information that corresponds to the first sidelink data and that is sent by each terminal device in the first terminal device group.

In the foregoing case 4, a frequency domain resource of a feedback resource may be determined based on a frequency domain resource used to send sidelink data, and an ACK and/or a NACK are/is fed back in a code division manner, so that effective HARQ ACK/NACK feedback is implemented.

Second, for a case in which the feedback resource information is used to indicate the PRB corresponding to each of the K time units, a process in which the receiving terminal device determines the feedback resource used by the receiving terminal device to send the acknowledgment information corresponding to the first sidelink data is described. It may be understood that when the feedback resource information is used to indicate the PRB corresponding to each of the K time units, the process is only applicable to a short-format PSFCH.

Case 1: Unicast communication is performed between the receiving terminal device and the sending terminal device. A frequency domain resource used by the receiving terminal device to send the acknowledgment information corresponding to the first sidelink data is the frequency domain resource occupied by the PRB group corresponding to the first time unit.

For example, K=3, and the first target frequency domain resource used by the sending terminal device to send the first sidelink data to the receiving terminal device in the first time unit corresponds to a subchannel 1 and a subchannel 2. Each of the subchannel 1 and the subchannel 2 corresponds to six PRBs. PRBs corresponding to the subchannel 1 are divided into three PRB groups, and indexes of the three PRB groups are respectively 0, 1, and 2. PRBs corresponding to the subchannel 2 are divided into three PRB groups, and indexes of the three PRB groups are respectively 0, 1, and 2. An index of a PRB group corresponding to the 1st time unit in the K time units is 0, an index of a PRB group corresponding to the 2nd time unit is 1, and an index of a PRB group corresponding to the 3rd time unit is 2. When the first time unit is the 1st time unit in the K time units, both a PRB group 1 whose index is 0 in the three PRB groups corresponding to the subchannel 1 and a PRB group 2 whose index is 0 in the three PRB groups corresponding to the subchannel 2 are PRB groups corresponding to the first time unit. As described above, a PRB corresponding to a subchannel is a PRB determined based on a frequency domain resource occupied by the subchannel and the time unit occupied by the corresponding feedback channel resource.

The receiving terminal device obtains a first cyclic shift value used by the terminal device to send the acknowledgment information corresponding to the first sidelink data. In a manner, the first cyclic shift value corresponding to the receiving terminal device may be one or two default cyclic shift values in all cyclic shift values. For example, in the ACK/NACK mode, first cyclic shift values corresponding to the receiving terminal device are by default the 1st cyclic shift value 0 and the 2nd cyclic shift value 1 in all the cyclic shift values.

It may be understood that in this case, cyclic shift values used by a terminal device in the first terminal device group to feed back acknowledgment information corresponding to sidelink data sent by the sending terminal device in the K time units may be the same.

In this case, the receiving terminal device may generate a first code sequence by using the corresponding first cyclic shift value. The feedback resource used by the receiving terminal device to send the acknowledgment information corresponding to the first sidelink data includes the first code sequence, the frequency domain resource occupied by the PRB group corresponding to the first time unit, and the time unit occupied by the corresponding feedback channel resource.

Correspondingly, the sending terminal device may determine, by using a same method, the feedback resource used by the receiving terminal device to send the acknowledgment information corresponding to the first sidelink data, and receive, on the feedback resource, the acknowledgment information that corresponds to the first sidelink data and that is sent by the receiving terminal device.

In the foregoing case 1, frequency domain resources may be allocated to feedback resources corresponding to the K time units in a frequency division manner, so that effective HARQ ACK/NACK feedback is implemented.

Case 2: Unicast communication is performed between the receiving terminal device and the sending terminal device. A frequency domain resource used by the receiving terminal device to send the acknowledgment information corresponding to the first sidelink data occupies a frequency domain resource occupied by one PRB.

In a manner, the receiving terminal device determines that a PRB whose index is a default value in the PRB group corresponding to the first time unit is a first PRB corresponding to the receiving terminal device, and the first PRB corresponding to the receiving terminal device means that the frequency domain resource used by the receiving terminal device to send the acknowledgment information corresponding to the first sidelink data is a frequency domain resource occupied by the first PRB, where for example, the default value is 0.

For example, K=3, and the first target frequency domain resource used by the sending terminal device to send the first sidelink data to the receiving terminal device in the first time unit corresponds to a subchannel 1 and a subchannel 2. Each of the subchannel 1 and the subchannel 2 corresponds to six PRBs. PRBs corresponding to the subchannel 1 are divided into three PRB groups, and indexes of the three PRB groups are respectively 0, 1, and 2. PRBs corresponding to the subchannel 2 are divided into three PRB groups, and indexes of the three PRB groups are respectively 0, 1, and 2. An index of a PRB group corresponding to the $1^{st}$ time unit in the K time units is 0, an index of a PRB group corresponding to the $2^{nd}$ time unit is 1, and an index of a PRB group corresponding to the $3^{rd}$ time unit is 2. When the first time unit is the $1^{st}$ time unit in the K time units, both a PRB group 1 whose index is 0 in the three PRB groups corresponding to the subchannel 1 and a PRB group 2 whose index is 0 in the three PRB groups corresponding to the subchannel 2 are PRB groups corresponding to the first time unit.

In this example, PRB groups corresponding to the first time unit include the PRB group 1 and the PRB group 2, and according to a preconfigured rule, indexes 0 and 1 are respectively allocated to two PRBs in the PRB group 1, and indexes 2 and 3 are allocated to two PRBs in the PRB group 2. When the default value is 0, the first PRB corresponding to the receiving terminal device is by default a PRB whose index is 0.

The receiving terminal device obtains a first cyclic shift value used by the receiving terminal device to send the acknowledgment information corresponding to the first sidelink data. A specific method is the same as that in the case 1, and details are not described herein again.

For a method in which the receiving terminal device obtains the first cyclic shift value corresponding to the receiving terminal device, refer to the method, in the case 1, used when the feedback resource information is used to indicate the cyclic shift value corresponding to each of the K time units, and details are not described herein again.

In this case, the receiving terminal device may generate a first code sequence by using the corresponding first cyclic shift value. The feedback resource used by the receiving terminal device to send the acknowledgment information corresponding to the first sidelink data includes the first code sequence, the frequency domain resource occupied by the first PRB corresponding to the receiving terminal device, and the time unit occupied by the corresponding feedback channel resource.

In this case, the receiving terminal device may determine a second feedback resource based on a frequency domain resource occupied by a second PRB in the PRB group corresponding to the first time unit, the first code sequence, and the time unit occupied by the corresponding feedback channel resource, and repeatedly sends the acknowledgment information corresponding to the first sidelink data based on the second feedback resource. The second PRB in the PRB group corresponding to the first time unit is a PRB, other than the first PRB corresponding to the receiving terminal device, in the PRB group corresponding to the first time unit.

Correspondingly, the sending terminal device may determine, by using a same method, the feedback resource used by the receiving terminal device to send the acknowledgment information corresponding to the first sidelink data, and receive, on the feedback resource, the acknowledgment information that corresponds to the first sidelink data and that is sent by the receiving terminal device.

In the foregoing case 2, frequency domain resources may be allocated to feedback resources corresponding to the K time units in a frequency division manner, so that effective HARQ ACK/NACK feedback is implemented.

Case 3: Multicast communication is performed between the sending terminal device and a terminal device that is in a first terminal device group in which the receiving terminal device is located.

A frequency domain resource used by each terminal device in the first terminal device group to send acknowledgment information corresponding to the first sidelink data is the frequency domain resource occupied by the PRB group corresponding to the first time unit. The first sidelink data is sidelink data sent by the sending terminal device in the first time unit.

Each terminal device in the first terminal device group obtains a cyclic shift value used by the terminal device to send the acknowledgment information corresponding to the first sidelink data. Each terminal device in the first terminal device group may obtain a first cyclic shift value corresponding to the terminal device based on an identifier of the terminal device. In the ACK/NACK mode, a terminal device whose identifier is $i$ in the first terminal device group may specifically obtain two corresponding first cyclic shift values based on $2 \times i$ and $2 \times i + 1$. $2 \times i$ may be a cyclic shift value used by the terminal device whose identifier is $i$ in the first terminal device group to send an ACK, and $2 \times i$ may be a cyclic shift value used by the terminal device whose identifier is $i$ in the first terminal device group to send a NACK.

It may be understood that in this case, cyclic shift values used by a terminal device in the first terminal device group to feed back acknowledgment information corresponding to sidelink data sent by the sending terminal device in the K time units may be the same.

For example, for the short-format PSFCH, if the receiving terminal device sends the acknowledgment information corresponding to the first sidelink data by using a PUCCH format 0 in NR, when the PRB group corresponding to the first time unit includes two PRBs in total, there may be 24 cyclic shift values. In the ACK/NACK mode, the first terminal device group may include a maximum of 12 terminal devices. In this case, in the ACK/NACK mode, cyclic shift values corresponding to a terminal device whose identifier is 0 may be 0 and 1, where 0 is used to send an ACK, and 1 is used to send a NACK; cyclic shift values corresponding to a terminal device whose identifier is 1 may be 2 and 3, where 2 is used to send an ACK, and 3 is used to send a NACK; cyclic shift values corresponding to a terminal device whose identifier is 11 may be 22 and 23, where 22 is used to send an ACK, and 23 is used to send a NACK.

In this case, each terminal device in the first terminal device group may generate a code sequence of the terminal device by using the corresponding cyclic shift value. A feedback resource used by the terminal device to send the acknowledgment information corresponding to the first sidelink data includes the code sequence of the terminal device, the frequency domain resource occupied by the PRB group corresponding to the first time unit, and the time unit occupied by the corresponding feedback channel resource.

Correspondingly, the sending terminal device may determine, by using a same method, the feedback resource used by each terminal device in the first terminal device group to send the acknowledgment information corresponding to the first sidelink data, and receive, on the feedback resource, the acknowledgment information that corresponds to the first sidelink data and that is sent by each terminal device in the first terminal device group.

In the foregoing case 3, frequency domain resources may be allocated to feedback resources corresponding to the K time units in a frequency division manner, and an ACK and/or a NACK are/is fed back to the terminal device in a code division manner, so that effective HARQ ACK/NACK feedback is implemented.

Case 4: Multicast communication is performed between the sending terminal device and a terminal device that is in a first terminal device group in which the receiving terminal device is located. A frequency domain resource used by each terminal device in the first terminal device group to send acknowledgment information corresponding to the first sidelink data occupies a frequency domain resource occupied by one PRB.

Each terminal device in the first terminal device group may determine a target index based on an identifier of the terminal device and m, and a PRB whose index is the target index in the PRB group corresponding to the first time unit is a PRB corresponding to the terminal device. Specifically, an index of a PRB corresponding to a terminal device whose identifier is $i$ in the first terminal device group may be obtained based on [$i/m$].

Each terminal device in the first terminal device group may determine a cyclic shift value corresponding to the terminal device based on the identifier of the terminal device and m. In the ACK/NACK mode, two first cyclic shift values corresponding to the terminal device whose identifier is $i$ may be obtained based on mod(2i, 2m) and mod(2i+1, 2m). mod(2i, 2m) may be a cyclic shift value used by the receiving terminal device to send an ACK, and mod(2i+1, 2m) may be a cyclic shift value used by the receiving terminal device to send a NACK.

For example, K=3, and the first target frequency domain resource used by the sending terminal device to send the first sidelink data to the receiving terminal device in the first time unit corresponds to a subchannel 1 and a subchannel 2. Each of the subchannel 1 and the subchannel 2 corresponds to six PRBs. PRBs corresponding to the subchannel 1 are divided into three PRB groups, and indexes of the three PRB groups are respectively 0, 1, and 2. PRBs corresponding to the subchannel 2 are divided into three PRB groups, and indexes of the three PRB groups are respectively 0, 1, and 2. An index of a PRB group corresponding to the 1st time unit in the K time units is 0, an index of a PRB group corresponding to the 2nd time unit is 1, and an index of a PRB group corresponding to the 3rd time unit is 2. When the first time unit is the 1st time unit in the K time units, both a PRB group 1 whose index is 0 in the three PRB groups corresponding to the subchannel 1 and a PRB group 2 whose index is 0 in the three PRB groups corresponding to the subchannel 2 are PRB groups corresponding to the first time unit.

In this example, PRB groups corresponding to the first time unit include the PRB group 1 and the PRB group 2, and according to a preconfigured rule, indexes 0 and 1 are respectively allocated to two PRBs in the PRB group 1, and indexes 2 and 3 are allocated to two PRBs in the PRB group 2. An index of a PRB corresponding to the terminal device whose identifier is $i$ is obtained based on $\lfloor i/m \rfloor$. For example, for the short-format PSFCH, if the receiving terminal device sends the acknowledgment information corresponding to the first sidelink data by using a PUCCH format 0 in NR, when the frequency domain resource used by the receiving terminal device to send the acknowledgment information corresponding to the first sidelink data occupies a frequency domain resource occupied by one PRB, there may be 12 cyclic shift values: 0 to 11. Therefore, in the ACN/NACK mode, the quantity m of multiplexed terminal devices is equal to 6. In this case, terminal devices whose identifiers are 0 to 5 correspond to a PRB whose index is 0, terminal devices whose identifiers are 6 to 11 correspond to a PRB whose index is 1, terminal devices whose identifiers are 12 to 17 correspond to a PRB whose index is 2, and terminal devices whose identifiers are 18 to 23 correspond to a PRB whose index is 3.

In the ACK/NACK mode, cyclic shift values corresponding to a terminal device whose identifier is 0 may be 0 and 1, where 0 is used to send an ACK, and 1 is used to send a NACK; cyclic shift values corresponding to a terminal device whose identifier is 1 may be 2 and 3; the rest may be deduced by analogy, and cyclic shift values corresponding to a terminal device whose identifier is 5 may be 10 and 11. Cyclic shift values corresponding to a terminal device whose identifier is 6 may be 0 and 1; cyclic shift values corresponding to a terminal device whose identifier is 7 may be 2 and 3; the rest may be deduced by analogy, and cyclic shift values corresponding to a terminal device whose identifier is 11 may be 10 and 11. Cyclic shift values corresponding to a terminal device whose identifier is 12 may be 0 and 1; the rest may be deduced by analogy, and cyclic shift values corresponding to a terminal device whose identifier is 17 may be 10 and 11. Cyclic shift values corresponding to a terminal device whose identifier is 18 may be 0 and 1; the rest may be deduced by analogy, and cyclic shift values corresponding to a terminal device whose identifier is 23 may be 10 and 11.

In this case, each terminal device in the first terminal device group may generate a code sequence of the terminal device by using the corresponding cyclic shift value. A feedback resource used by the terminal device to send the acknowledgment information corresponding to the first sidelink data includes the code sequence of the terminal device, a frequency domain resource occupied by the PRB corresponding to the terminal device, and the time unit occupied by the corresponding feedback channel resource.

Correspondingly, the sending terminal device may determine, by using a same method, the feedback resource used by each terminal device in the first terminal device group to send the acknowledgment information corresponding to the first sidelink data, and receive, on the feedback resource, the acknowledgment information that corresponds to the first sidelink data and that is sent by each terminal device in the first terminal device group.

In the foregoing case 4, frequency domain resources may be allocated to feedback resources corresponding to the K time units in a frequency division manner, and an ACK and/or a NACK are/is fed back to the terminal device in a code division manner, so that effective HARQ ACK/NACK feedback is implemented.

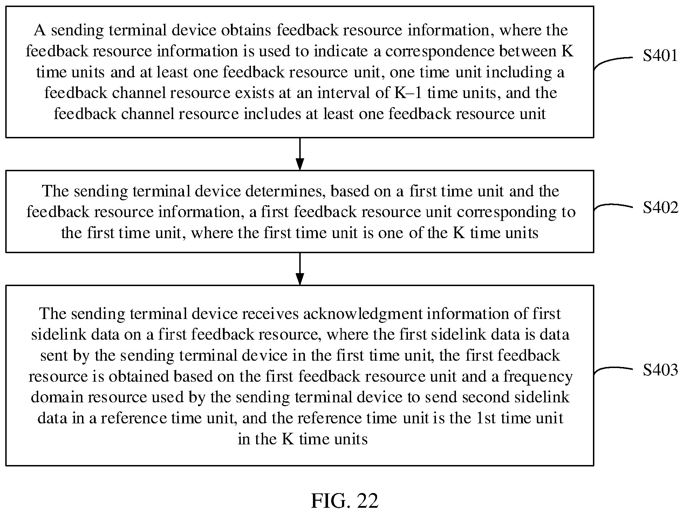

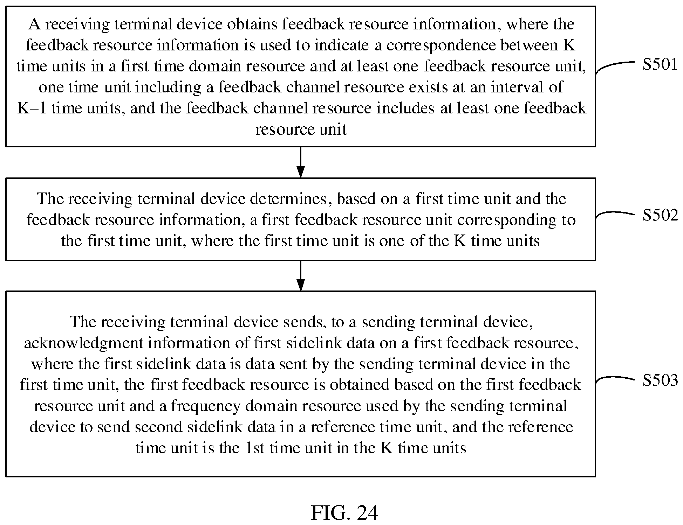

The following describes, with reference to embodiments shown in FIG. 22 and FIG. 24, another implementation for avoiding a conflict between feedback resources corresponding to K time units.

FIG. 22 is a third flowchart of a communication method according to an embodiment of this application. The method in this embodiment is only applicable to a short-format PSFCH. With reference to FIG. 22, the method in this embodiment includes the following steps.

Step S401: A sending terminal device obtains feedback resource information, where the feedback resource information is used to indicate a correspondence between K time units and at least one feedback resource unit, one time unit including a feedback channel resource exists at an interval of K-1 time units, and the feedback channel resource includes at least one feedback resource unit.

Specifically, for specific implementation of this step, refer to the descriptions in step S201.

Step S402: The sending terminal device determines, based on a first time unit and the feedback resource information, a first feedback resource unit corresponding to the first time unit, where the first time unit is one of the K time units.

Specifically, for specific implementation of this step, refer to the descriptions in step S202.

Step S403: The sending terminal device receives acknowledgment information of first sidelink data on a first feedback resource, where the first sidelink data is data sent by the sending terminal device in the first time unit, the first feedback resource is obtained based on the first feedback resource unit and a frequency domain resource used by the sending terminal device to send second sidelink data in a reference time unit, and the reference time unit is the 1st time unit in the K time units.

The following describes a process of obtaining the first feedback resource.

In a case in which the feedback resource information indicates a cyclic shift value corresponding to each of the K time units:

The sending terminal device determines that a frequency domain resource used to send the first sidelink data in the reference time unit is a frequency domain resource corresponding to the first time unit, and the frequency domain resource corresponding to the first time unit is a frequency domain resource used by a receiving terminal device to send the acknowledgment information corresponding to the first sidelink data. The frequency domain resource corresponding to the first time unit is a frequency domain resource occupied by the first feedback resource corresponding to the first time unit, and the sending terminal device determines the first feedback resource corresponding to the first time unit in a corresponding feedback channel resource based on the frequency domain resource of the first feedback resource corresponding to the first time unit and the cyclic shift value. For ease of description, the frequency domain resource used by the sending terminal device to send the first sidelink data in the reference time unit is subsequently referred to as a third target frequency domain resource.

In a case in which the feedback resource information is used to indicate a PRB corresponding to each of the K time units:

The sending terminal device divides PRBs corresponding to a third target frequency domain resource into K PRB groups. When the third target frequency domain resource corresponds to X PRBs, each PRB group includes X/K PRBs, and X is an integer greater than 1. One index is allocated to each of the K PRB groups according to a preconfigured rule. A PRB group whose index is a first index in the K PRB groups is a PRB group corresponding to the first time unit, and a frequency domain resource occupied by the PRB group corresponding to the first time unit is a frequency domain resource corresponding to the first time unit. Therefore, the sending terminal device may determine the first feedback resource corresponding to the first time unit in a corresponding feedback channel resource based on a PRB corresponding to the first time unit. The PRB corresponding to the third target frequency domain resource is a PRB determined based on the third target frequency domain resource and a time unit in which the corresponding feedback channel resource is located.

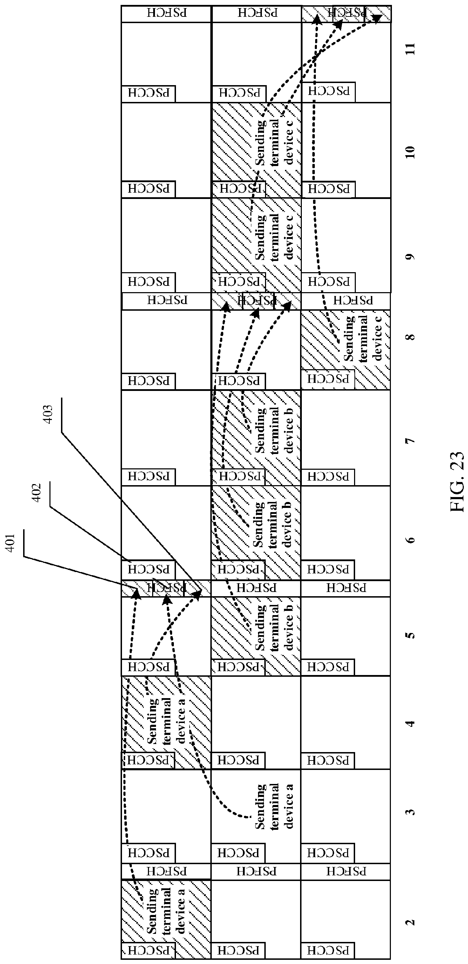

This manner is described below with reference to FIG. 23. FIG. 23 is a third schematic diagram of a feedback resource configuration according to an embodiment of this application. With reference to FIG. 23, when K=3 and L=1, for three slots 2, 3, and 4, the reference time unit is the slot 2 in FIG. 23, and a PRB corresponding to a frequency domain resource (a frequency domain resource occupied by a subchannel 1) used by the sending terminal device to send the first sidelink data in the slot 2 is a PRB determined based on a slot 5 and the frequency domain resource occupied by the subchannel 1. If the frequency domain resource used by the sending terminal device to send the first sidelink data in the slot 1 corresponds to six PRBs, the six PRBs are divided into three PRB groups, and one index is allocated to each of the three PRB groups according to the preconfigured rule, where indexes of the three PRB groups are respectively 0, 1, and 2. A frequency domain resource occupied by a feedback resource numbered 401 may be a frequency domain resource occupied by a PRB group whose index is 0, a frequency domain resource occupied by a feedback resource numbered 402 may be a frequency domain resource occupied by a PRB group whose index is 1, and a frequency domain resource occupied by a feedback resource numbered 403 may be a frequency domain resource occupied by a PRB group whose index is 2.

If an index of a PRB group corresponding to the 1st time unit in the K time units is 0, an index of a PRB group corresponding to the 2nd time unit is 0, and an index of a PRB group corresponding to the 3rd time unit is 2, a terminal device a receives, on the feedback resource numbered 401, acknowledgment information for sidelink data sent by the sending terminal device a in the slot 2, the terminal device a receives, on the feedback resource numbered 402, acknowledgment information for sidelink data sent by the sending terminal device a in the slot 3, and the terminal device a receives, on the feedback resource numbered 403, acknowledgment information for sidelink data sent by the sending terminal device a in the slot 4.

After determining the first feedback resource corresponding to the first unit, the sending terminal device receives, on the first feedback resource, the acknowledgment information corresponding to the first sidelink data.

In this embodiment, a frequency domain resource occupied by the feedback channel resource is limited to a frequency domain resource used by the sending terminal device to send sidelink data in the 1st time unit in the K time units, so that frequency domain resources of feedback resources corresponding to a plurality of time units may be limited, and a problem, happened when the receiving terminal device simultaneously performs HARQ-ACK feedback to a plurality of sending terminal devices, that at least a part of sending terminal devices cannot receive, due to limited power, acknowledgment information sent by the receiving terminal device when the receiving terminal device performs the HARQ-ACK feedback is resolved.

FIG. 24 is a fourth flowchart of a communication method according to an embodiment of this application. With reference to FIG. 24, the method in this embodiment includes the following steps.

Step S501: A receiving terminal device obtains feedback resource information, where the feedback resource information is used to indicate a correspondence between K time units in a first time domain resource and at least one feedback resource unit, one time unit including a feedback channel resource exists at an interval of K-1 time units, and the feedback channel resource includes at least one feedback resource unit.

Specifically, for specific implementation of this step, refer to specific implementation in step S201.

Step S502: The receiving terminal device determines, based on a first time unit and the feedback resource information, a first feedback resource unit corresponding to the first time unit, where the first time unit is one of the K time units.

Specifically, for specific implementation of this step, refer to specific implementation in step S402.

Step S503: The receiving terminal device sends, to a sending terminal device, acknowledgment information of first sidelink data on a first feedback resource, where the first sidelink data is data sent by the sending terminal device in the first time unit, the first feedback resource is obtained based on the first feedback resource unit and a frequency domain resource used by the sending terminal device to send second sidelink data in a reference time unit, and the reference time unit is the 1st time unit in the K time units.

In this embodiment, a frequency domain resource occupied by a feedback channel resource is limited to a frequency domain resource used by the sending terminal device to send sidelink data in the 1st time unit in the K time units, so that frequency domain resources of feedback resources corresponding to a plurality of time units may be limited, and a problem, happened when the receiving terminal device simultaneously performs HARQ-ACK feedback to a plurality of sending terminal devices, that at least a part of sending terminal devices cannot receive, due to limited power, acknowledgment information sent by the receiving terminal device when the receiving terminal device performs the HARQ-ACK feedback is resolved.

For a process, in the embodiment shown in FIG. 24, in which the receiving terminal device determines the feedback resource used by the receiving terminal device to send the acknowledgment information corresponding to the first sidelink data, and a process, in the embodiment shown in FIG. 22, in which the sending terminal device determines the feedback resource for receiving the acknowledgment information corresponding to the first sidelink data, refer to the descriptions of the process, in the embodiment shown in FIG. 18, in which the receiving terminal device determines the feedback resource used by the receiving terminal device to send the acknowledgment information corresponding to the first sidelink data, and the descriptions of the process, in the embodiment shown in FIG. 21, in which the sending terminal device determines the feedback resource for receiving the acknowledgment information corresponding to the first sidelink data. Only the frequency domain resource for sending the sidelink data in the first time unit in the descriptions of the process, in the embodiment shown in FIG. 18, in which the receiving terminal device determines the feedback resource used by the receiving terminal device to send the acknowledgment information corresponding to the first sidelink data, and the descriptions of the process, in the embodiment shown in FIG. 21, in which the sending terminal device determines the feedback resource for receiving the acknowledgment information corresponding to the first sidelink data needs to be replaced with the frequency domain resource used by the sending terminal device to send the sidelink data in the reference time unit. In addition, for a method for determining a PRB group corresponding to the frequency domain resource used by the sending terminal device to send the sidelink data in the reference time unit, refer to the method in the embodiment shown in FIG. 22. The following describes, for only a case in which the feedback resource information is used to indicate the PRB corresponding to each of the K time units and multicast communication is performed between the sending terminal device and a terminal device that is in a first terminal device group in which the receiving terminal device is located, a process in which the receiving terminal device determines the feedback resource used by the receiving terminal device to send the acknowledgment information corresponding to the first sidelink data and a process in which the sending terminal device determines the feedback resource for receiving the acknowledgment information corresponding to the first sidelink data.

Specifically, a frequency domain resource used by each terminal device in the first terminal device group to send acknowledgment information corresponding to the first sidelink data occupies a frequency domain resource occupied by one PRB.

Each terminal device in the first terminal device group may determine a first offset value based on an identifier of the terminal device and m, and a PRB whose offset value is the first offset value in one or more PRBs corresponding to the first time unit is a PRB corresponding to the terminal device. m is a quantity of multiplexed terminal devices, that is, a quantity of terminal devices that can send acknowledgment information on a frequency domain resource occupied by a same PRB. Specifically, an offset value of a PRB corresponding to a terminal device whose identifier is $i$ in the first terminal device group may be obtained based on $\lfloor i/m \rfloor$. Each PRB in a PRB group has an offset value relative to a start PRB, where the start PRB is the 1st PRB or the last PRB in the PRB group. When the PRB is the start PRB, the offset value of the PRB is 0. When the PRB is not the start PRB, the offset value of the PRB is equal to 1 plus a quantity of PRBs between the PRB and the start PRB.

Each terminal device in the first terminal device group may determine a cyclic shift value corresponding to the terminal device based on the identifier of the terminal device and m. In the ACK/NACK mode, two first cyclic shift values corresponding to the terminal device whose identifier is $i$ may be obtained based on mod(2i, 2m) and mod(2i+1, 2m). mod(2i, 2m) may be a cyclic shift value used by the receiving terminal device to send an ACK, and mod(2i+1, 2m) may be a cyclic shift value used by the receiving terminal device to send an ACK.

For example, K=3, and the third target frequency domain resource used by the sending terminal device to send the first sidelink data to the receiving terminal device in the reference time unit corresponds to a subchannel 1 and a subchannel 2. When a frequency domain resource occupied by one subchannel corresponds to a frequency domain resource occupied by six PRBs, that is, the third target frequency domain resource corresponds to 12 PRBs, the 12 PRBs are divided into three PRB groups, where indexes of the three PRB groups are respectively 0, 1, and 2. The 12 PRBs corresponding to the third target frequency domain resource are PRBs determined based on the third target frequency domain resource and the time unit occupied by the corresponding feedback channel resource. When the first time unit is the 1st time unit in the K time units, and an index of a PRB group corresponding to the 1st time unit in the K time units is 0, a PRB group 1 whose index is 0 in the three PRB groups is a PRB group corresponding to the first time unit.

In this example, the PRB group 1 corresponding to the first time unit includes four PRBs, and the offset value of the PRB corresponding to the terminal device whose identifier is $i$ is obtained based on $\lfloor i/m \rfloor$. For example, for a short-format PSFCH, if the receiving terminal device sends the acknowledgment information corresponding to the first sidelink data by using a PUCCH format 0 in NR, when the frequency domain resource used by the terminal device in the first terminal device group to send the acknowledgment information corresponding to the first sidelink data occupies a frequency domain resource occupied by one PRB, there may be 12 cyclic shift values: 0 to 11. Therefore, in the ACN/NACK mode, the quantity m of multiplexed terminal devices is equal to 6. In this case, terminal devices whose identifiers are 0 to 5 correspond to a PRB whose offset value is 0, terminal devices whose identifiers are 6 to 11 correspond to a PRB whose offset value is 1, terminal devices whose identifiers are 12 to 17 correspond to a PRB whose offset value is 2, and terminal devices whose identifiers are 18 to 23 correspond to a PRB whose offset value is 3.

In the ACK/NACK mode, cyclic shift values corresponding to a terminal device whose identifier is 0 may be 0 and 1, where 0 is used to send an ACK, and 1 is used to send a NACK; cyclic shift values corresponding to a terminal device whose identifier is 1 may be 2 and 3; the rest may be deduced by analogy, and cyclic shift values corresponding to a terminal device whose identifier is 5 may be 10 and 11. Cyclic shift values corresponding to a terminal device whose identifier is 6 may be 0 and 1; cyclic shift values corresponding to a terminal device whose identifier is 7 may be 2 and 3; the rest may be deduced by analogy, and cyclic shift values corresponding to a terminal device whose identifier is 11 may be 10 and 11. Cyclic shift values corresponding to a terminal device whose identifier is 12 may be 0 and 1; the rest may be deduced by analogy, and cyclic shift values corresponding to a terminal device whose identifier is 17 may be 10 and 11. Cyclic shift values corresponding to a terminal device whose identifier is 18 may be 0 and 1; the rest may be deduced by analogy, and cyclic shift values corresponding to a terminal device whose identifier is 23 may be 10 and 11.

In this case, each terminal device in the first terminal device group may generate a code sequence of the terminal device by using the corresponding cyclic shift value. A feedback resource used by the terminal device to send the acknowledgment information corresponding to the first sidelink data includes the code sequence of the terminal device, a frequency domain resource occupied by the PRB corresponding to the terminal device, and the time unit occupied by the corresponding feedback channel resource.

Correspondingly, the sending terminal device may determine, by using a same method, the feedback resource used by each terminal device in the first terminal device group to send the acknowledgment information corresponding to the first sidelink data, and receive, on the feedback resource, the acknowledgment information that corresponds to the first sidelink data and that is sent by each terminal device in the first terminal device group.

It may be understood that, in the foregoing embodiments, operations and steps implemented by a terminal device may also be implemented by a component (for example, a chip or a circuit) in the terminal device. This is not limited in the embodiments of this application.

The foregoing describes the communication method in the embodiments of this application, and the following describes a communication apparatus in this application by using specific embodiments.

The foregoing describes the communication method in the embodiments of this application, and the following describes a communication apparatus in this application.

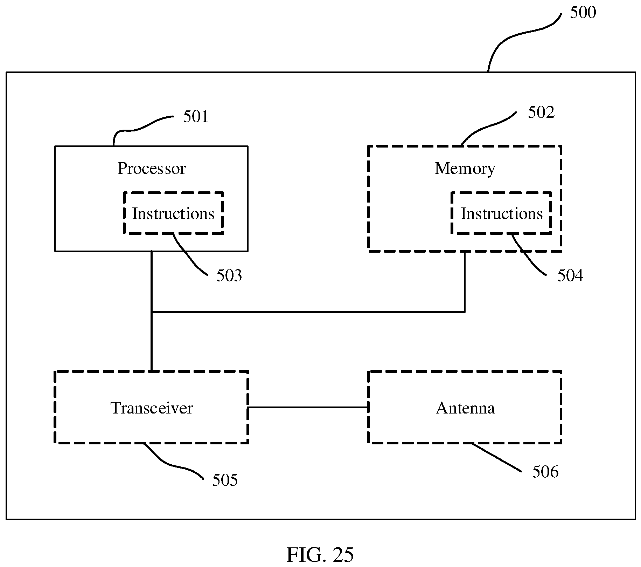

FIG. 25 is a schematic diagram of a structure of a communication apparatus according to an embodiment of this application. As shown in FIG. 25, the communication apparatus 500 in this embodiment may be the first terminal device (or a component that may be used in the first terminal device), the second terminal device (or a component that may be used in the second terminal device), the sending terminal device (or a component that may be used in the sending terminal device), or the receiving terminal device (or a component that may be used in the receiving terminal device) mentioned in the foregoing method embodiments. The communication apparatus may be configured to implement the method that corresponds to the first terminal device or the second terminal device and that is described in the foregoing method embodiments. For details, refer to the descriptions in the foregoing method embodiments.

The communication apparatus 500 may include one or more processors 501. The processor 501 may also be referred to as a processing unit, and may implement a specific control or processing function. The processor 501 may be a general-purpose processor, a dedicated processor, or the like. For example, the processor 501 may be a baseband processor or a central processing unit. The baseband processor may be configured to process a communication protocol and communication data, and the central processing unit may be configured to control the communication apparatus, execute a software program, and process data of the software program.

In an optional design, the processor 501 may alternatively store instructions 503 or data (for example, intermediate data). The instructions 503 may be run by the processor, so that the communication apparatus 500 is enabled to perform the method that corresponds to the terminal device or the second terminal device and that is described in the foregoing method embodiments.

In another possible design, the communication apparatus 500 may include a circuit, and the circuit may implement a sending function, a receiving function, or a communication function in the foregoing method embodiments.

Optionally, the communication apparatus 500 may include one or more memories 502 that may store instructions 504. The instructions may be run on the processor, so that the communication apparatus 500 is enabled to perform the method described in the foregoing method embodiments.

Optionally, the memory may alternatively store data. The processor and the memory may be separately disposed, or may be integrated together.

Optionally, the communication apparatus 500 may further include a transceiver 505 and/or an antenna 506. The processor 501 may be referred to as a processing unit. The processor 501 controls the communication apparatus 500. The transceiver 505 may be referred to as a transceiver unit, a transceiver machine, a transceiver circuit, a transceiver, or the like, and is configured to implement a transceiver function of the communication apparatus.

In a design, if the communication apparatus 500 is configured to implement an operation corresponding to the first terminal device or the sending terminal device in the foregoing embodiments, for example, the transceiver 505 may perform step S103 in the embodiment shown in FIG. 10, step 203 in the embodiment shown in FIG. 18, and step S403 in the embodiment shown in FIG. 22, and the processor 501 performs step S102 in the embodiment shown in FIG. 10, step S201 and step S202 in the embodiment shown in FIG. 18, and step S401 and step S402 in the embodiment shown in FIG. 22.

If the communication apparatus 500 is configured to implement an operation corresponding to the second terminal device or the receiving terminal device in the foregoing embodiments, for example, the transceiver 505 may perform step S101 in the embodiment shown in FIG. 10, step 303 in the embodiment shown in FIG. 21, and step S503 in the embodiment shown in FIG. 24, and the processor 501 performs step S301 and step S302 in the embodiment shown in FIG. 21, and step S501 and step S502 in the embodiment shown in FIG. 24.

For specific implementation processes of the transceiver 505 and the processor 501, refer to related descriptions in the foregoing embodiments. Details are not described herein again.

In another design, if the communication apparatus is configured to implement an operation corresponding to the second terminal device in the foregoing embodiments, for example, the transceiver 505 may send resource configuration information to a first terminal device.

For a specific implementation process of the transceiver 505, refer to related descriptions in the foregoing embodiments. Details are not described herein again.

The processor 501 and the transceiver 505 that are described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (N-channel metal oxide semiconductor, NMOS), a P-type metal oxide semiconductor (P-channel metal oxide semiconductor, PMOS), a bipolar junction transistor (Bipolar Junction Transistor, BJT), a bipolar CMOS (BiCMOS), silicon germanium (SiGe), gallium arsenide (GaAs), and the like.

It should be understood that the processor mentioned in this embodiment of this application may be a central processing unit (Central Processing Unit, CPU), another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, discrete gate or transistor logic device, or discrete hardware component, the memory (storage module) is integrated into the processor.

Although in the foregoing descriptions of the embodiments, the communication apparatus 500 is described by using the terminal device or the network device as an example, a scope of the communication apparatus described in this application is not limited to the first terminal device or the second terminal device, and a structure of the communication apparatus may not be limited to that shown in FIG. 25. The communication apparatus 500 may be an independent device or may be a part of a relatively large device. For example, the device may be:

(1) an independent integrated circuit (IC), a chip, or a chip system or subsystem;
(2) a set including one or more ICs, where optionally, the IC set may further include a storage component configured to store data and/or instructions;
(3) an ASIC, for example, a modem (MSM);
(4) a module that can be embedded in another device;
(5) a receiver, a terminal device, a cellular phone, a wireless device, a handheld phone, a mobile unit, a network device, or the like; or
(6) another device, or the like.

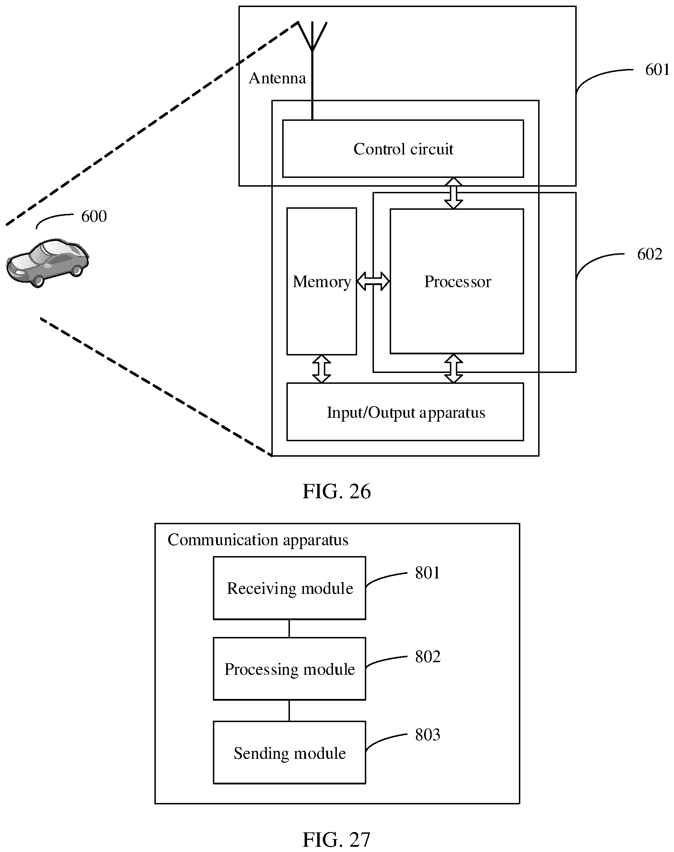

FIG. 26 is a schematic diagram of a structure of a terminal device according to an embodiment of this application. The terminal device is applicable to the terminal device described in the foregoing embodiments of this application. For ease of description, FIG. 26 shows only main components of the terminal device. As shown in FIG. 26, the terminal device 600 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display screen, or a keyboard, is mainly configured to: receive data input by a user, and output data to the user.

After the terminal device is powered on, the processor may read the software program in a storage unit, interpret and execute instructions of the software program, and process the data of the software program. When data needs to be sent in a wireless manner, the processor performs baseband processing on the to-be-sent data, and outputs a baseband signal to the radio frequency circuit. After performing radio frequency processing on the baseband signal, the radio frequency circuit sends a radio frequency signal outward in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data and processes the data.

A person skilled in the art may understand that, for ease of description, FIG. 26 shows only one memory and one processor. An actual terminal device may have a plurality of processors and a plurality of memories. The memory may also be referred to as a storage medium, a storage device, or the like. This is not limited in this embodiment of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 26. A person skilled in the art may understand that the baseband processor and the central processing unit each may be an independent processor, and are interconnected by using technologies such as a bus. A person skilled in the art may understand that the terminal device may include a plurality of baseband processors to adapt to different network standards, the terminal device may include a plurality of central processing units to improve a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program. The processor executes the software program to implement a baseband processing function.

In an example, the antenna and the control circuit that have a transceiver function may be considered as a transceiver module 601 of the terminal device 600, and the processor having a processing function may be considered as a processing module 602 of the terminal device 600. As shown in FIG. 21, the terminal device 600 includes the transceiver module 601 and the processing module 602. The transceiver module may also be referred to as a transceiver, a transceiver machine, a transceiver apparatus, or the like. Optionally, a component that is configured to implement a receiving function and that is in the transceiver module 601 may be considered as a receiving module, and a component that is configured to implement a sending function and that is in the transceiver module 601 may be considered as a sending module. That is, the transceiver module 601 includes the receiving module and the sending module. For example, the receiving module may also be referred to as a receiver, a receiver machine, a receiver circuit, or the like, and the sending module may be referred to as a transmitter, a transmitter machine, a transmitter circuit, or the like.

FIG. 27 is a schematic diagram of a structure of a communication apparatus according to another embodiment of this application. The communication apparatus may be a first terminal device, or may be a component of the first terminal device, or may be another communication module, and is configured to implement the operations or steps corresponding to the terminal device in the method embodiments shown in FIG. 10, FIG. 18, and FIG. 22. The communication apparatus may include a receiving module 801, a processing module 802, and a sending module 803.

The receiving module 801 is configured to receive resource configuration information from a second terminal device. The processing module 802 is configured to determine a first time domain resource based on the resource configuration information. The sending module 803 is configured to send sidelink data to the second terminal device on a first resource, where the first time domain resource is a time domain resource of the first resource.

Optionally, the resource configuration information is used to indicate a position of the first time domain resource. Correspondingly, the resource configuration information may be in, but not limited to, the following several forms.

Form 1: The resource configuration information includes a first time domain resource index and a quantity M of indexes, where the first time domain resource index is used to indicate at least one time unit used to send the sidelink data to the second terminal device, the quantity M of indexes is a quantity of a plurality of time domain resource indexes maintained by the second terminal device, the plurality of time domain resource indexes include the first time domain resource index, and M is an integer greater than or equal to 2.

Form 2: The resource configuration information includes a bitmap corresponding to the first time domain resource.

Form 3: The resource configuration information includes an index of a bitmap corresponding to the first time domain resource.

Optionally, the first resource includes a first frequency domain resource and the first time domain resource, and the resource configuration information includes indication information of a start frequency domain resource of the first frequency domain resource; and the processing module 802 is further configured to determine the start frequency domain resource of the first frequency domain resource based on the resource configuration information.

Optionally, the resource configuration information is further used to indicate a first frequency domain resource, and the first resource includes the first frequency domain resource and the first time domain resource; and the processing module 802 is further configured to determine the first frequency domain resource based on the resource configuration information. Correspondingly, the resource configuration information may be in, but not limited to, the following several forms.

Form 1: The resource configuration information includes a bitmap corresponding to the first frequency domain resource.

Form 2: The resource configuration information includes an index of a bitmap corresponding to the first frequency domain resource.

Optionally, one time unit including a feedback channel resource exists at an interval of K-1 time units, the feedback channel resource includes at least one feedback resource unit, and K is an integer greater than 1. The processing module is further configured to: obtain feedback resource information, where the feedback resource information is used to indicate a correspondence between K time units in the first time domain resource and at least one feedback resource unit; and determine, based on a first time unit and the feedback resource information, a first feedback resource unit corresponding to the first time unit, where the first time unit is one of the K time units. The receiving module is further configured to receive acknowledgment information of first sidelink data on a first feedback resource, where the first sidelink data is data sent by the first terminal device in the first time unit, and the first feedback resource is obtained based on the first feedback resource unit and a frequency domain resource used by the first terminal device to send the first sidelink data.

Optionally, one time unit including a feedback channel resource exists at an interval of K-1 time units, the feedback channel resource includes at least one feedback resource unit, and K is an integer greater than 1. The processing module is further configured to: obtain feedback resource information, where the feedback resource information is used to indicate a correspondence between K time units in the first time domain resource and at least one feedback resource unit; and determine, based on a first time unit and the feedback resource information, a first feedback resource unit corresponding to the first time unit, where the first time unit is one of the K time units. The receiving module is further configured to receive acknowledgment information of first sidelink data on a first feedback resource, where the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units.

Optionally, the feedback resource information is used to indicate a cyclic shift value corresponding to each of the K time units, and the cyclic shift value is used to generate a code sequence.

It should be noted that the communication apparatus in this embodiment may be a terminal, or may be a chip used in the terminal, or another combined device or component that has a function of the terminal. When the communication apparatus is the terminal, the receiving module may be a receiver, and may include an antenna, a radio frequency circuit, and the like; the processing module may be one or more processors, for example, a central processing unit (central processing unit, CPU); the sending module may be a transmitter, and may include an antenna, a radio frequency circuit, and the like. The receiver and the transmitter may be an integrated transceiver. When the communication apparatus is the component that has the function of the terminal, the receiving module may be a radio frequency unit, the processing module may be a processor, and the sending module may be a radio frequency unit. When the communication apparatus is a chip system, the receiving module may be an input interface of the chip system, the processing module may be a processor of the chip system, and the sending module may be an output interface of the chip system.

The communication apparatus in this embodiment may be configured to perform the technical solutions of the first terminal device or the sending terminal device in the foregoing method embodiments. Their implementation principles and technical effects are similar, and details are not described herein again.

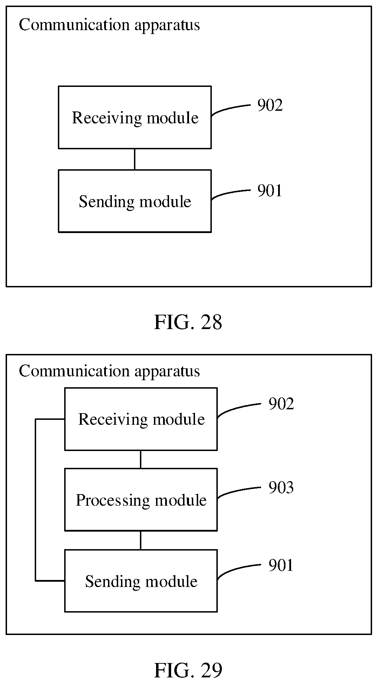

FIG. 28 is a schematic diagram of a structure of a communication apparatus according to another embodiment of this application. The communication apparatus may be a network device, or may be a component (for example, an integrated circuit or a chip) of the network device, or may be another communication module, and is configured to implement the operations corresponding to the second terminal device in the method embodiments shown in FIG. 10, FIG. 21, and FIG. 24. The communication apparatus may include a sending module 901 and a receiving module 902.

The sending module 901 is configured to send resource configuration information to a first terminal device. The receiving module 902 is configured to receive sidelink data from the first terminal device on a first resource, where a first time domain resource is a time domain resource of the first resource.

Optionally, the resource configuration information is used to indicate a position of the first time domain resource. Correspondingly, the resource configuration information may be in, but not limited to, the following several forms.

Form 1: The resource configuration information includes a first time domain resource index and a quantity M of indexes, where the first time domain resource index is used to indicate at least one time unit used to send the sidelink data to the second terminal device, the quantity M of indexes is a quantity of a plurality of time domain resource indexes maintained by the second terminal device, the plurality of time domain resource indexes include the first time domain resource index, and M is an integer greater than or equal to 2.

Form 2: The resource configuration information includes a bitmap corresponding to the first time domain resource.

Form 3: The resource configuration information includes an index of a bitmap corresponding to the first time domain resource.

Optionally, the first resource includes a first frequency domain resource and the first time domain resource, and the resource configuration information includes indication information of a start frequency domain resource of the first frequency domain resource.

With reference to the second aspect, in a possible implementation, the resource configuration information is further used to indicate a first frequency domain resource, and the first resource includes the first frequency domain resource and the first time domain resource. Correspondingly, the resource configuration information may be in, but not limited to, the following several forms.

Form 1: The resource configuration information includes a bitmap corresponding to the first frequency domain resource.

Form 2: The resource configuration information includes an index of a bitmap corresponding to the first frequency domain resource.

It should be noted that the communication apparatus in this embodiment may be a terminal, or may be a chip used in the terminal, or another combined device or component that has a function of the terminal. When the communication apparatus is the terminal, the receiving module may be a receiver, and may include an antenna, a radio frequency circuit, and the like; the sending module may be a transmitter, and may include an antenna, a radio frequency circuit, and the like. The receiver and the transmitter may be an integrated transceiver. When the communication apparatus is the component that has the function of the terminal, the receiving module may be a radio frequency unit, the processing module may be a processor, and the sending module may be a radio frequency unit. When the communication apparatus is a chip system, the receiving module may be an input interface of the chip system, the processing module may be a processor of the chip system, and the sending module may be an output interface of the chip system.

The communication apparatus in this embodiment may be configured to perform the technical solutions of the second terminal device or the receiving terminal device in the foregoing method embodiments. Their implementation principles and technical effects are similar, and details are not described herein again.

FIG. 29 is a schematic diagram of a structure of a communication apparatus according to another embodiment of this application. Based on the communication apparatus shown in FIG. 28, the communication apparatus in this embodiment may further include a processing module 903.

One time unit including a feedback channel resource exists at an interval of K-1 time units, the feedback channel resource includes at least one feedback resource unit, and K is an integer greater than 1.

Optionally, the processing module 903 is configured to: obtain feedback resource information, where the feedback resource information is used to indicate a correspondence between K time units in a first time domain resource and at least one feedback resource unit; and determine, based on a first time unit and the feedback resource information, a first feedback resource unit corresponding to the first time unit, where the first time unit is one of the K time units. The sending module 901 is further configured to send, to a first terminal device, acknowledgment information of first sidelink data on a first feedback resource, where the first sidelink data is data sent by the first terminal device in the first time unit, and the first feedback resource is obtained based on the first feedback resource unit and a frequency domain resource used by the first terminal device to send the first sidelink data.

Optionally, the processing module 903 is configured to: obtain feedback resource information, where the feedback resource information is used to indicate a correspondence between K time units in a first time domain resource and at least one feedback resource unit; and determine, based on a first time unit and the feedback resource information, a first feedback resource unit corresponding to the first time unit, where the first time unit is one of the K time units. The sending module 901 is further configured to send, to a first terminal device, acknowledgment information of first sidelink data on a first feedback resource, where the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units.

Optionally, the feedback resource information is used to indicate a cyclic shift value corresponding to each of the K time units, and the cyclic shift value is used to generate a code sequence.

It should be noted that, when the communication apparatus in this embodiment is a terminal, the processing module may be one or more processors, for example, a CPU.

The communication apparatus in this embodiment may be configured to perform the technical solutions of the second terminal device or the receiving terminal device in the foregoing method embodiments. Their implementation principles and technical effects are similar, and details are not described herein again.

It should be noted that, in the embodiments of this application, division into the modules is an example, and is merely logical function division. During actual implementation, another division manner may be used. Function modules in the embodiments of this application may be integrated into one processing module, or each of the modules may exist alone physically, or two or more modules may be integrated into one module. The integrated module may be implemented in a form of hardware, or may be implemented in a form of a software function module.

When the integrated module is implemented in the form of a software function module and sold or used as an independent product, the integrated unit may be stored in a computer-readable storage medium. Based on such an understanding, the technical solutions of this application essentially, or the part contributing to a current technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in the embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

An embodiment of this application further provides a readable storage medium. The readable storage medium stores a computer program; and when the computer program is executed, the communication method corresponding to the first terminal device, the communication method corresponding to the second terminal device, the communication method corresponding to the sending terminal device, or the communication method corresponding to the receiving terminal device is implemented.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are completely or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A communication method, comprising:

   receiving, by a first terminal device, resource configuration information from a second terminal device;
   determining, by the first terminal device, a first time domain resource based on the resource configuration information; and
   sending, by the first terminal device, sidelink data to the second terminal device on a first resource, wherein the first time domain resource is a time domain resource of the first resource.

2. The method according to claim 1, wherein the resource configuration information is used to indicate a position of the first time domain resource.

3. The method according to claim 2, wherein the resource configuration information comprises:
   a first time domain resource index and a quantity M of indexes, wherein the first time domain resource index is used to indicate at least one time unit used to send the sidelink data to the second terminal device, the quantity M of indexes is a quantity of a plurality of time domain resource indexes maintained by the second terminal device, the plurality of time domain resource indexes comprise the first time domain resource index, and M is an integer greater than or equal to 2.

4. The method according to claim 2, wherein the resource configuration information comprises:

   a bitmap corresponding to the first time domain resource; or
   an index of a bitmap corresponding to the first time domain resource.

5. The method according to any one of claims 1 to 3, wherein the first resource comprises a first frequency domain resource and the first time domain resource, and the resource configuration information comprises indication information of a start frequency domain resource of the first frequency domain resource; and the method further comprises:
determining, by the first terminal device, the start frequency domain resource of the first frequency domain resource based on the resource configuration information.

6. The method according to any one of claims 1 to 4, wherein the resource configuration information is further used to indicate a first frequency domain resource, and the first resource comprises the first frequency domain resource and the first time domain resource; and
the method further comprises:
determining, by the first terminal device, the first frequency domain resource based on the resource configuration information.

7. The method according to claim 6, wherein the resource configuration information comprises:

   a bitmap corresponding to the first frequency domain resource; or
   an index of a bitmap corresponding to the first frequency domain resource.

8. The method according to any one of claims 1 to 7, wherein one time unit comprising a feedback channel resource exists at an interval of K-1 time units, the feedback channel resource comprises at least one feedback resource unit, and K is an integer greater than 1; and the method further comprises:

   obtaining, by the first terminal device, feedback resource information, wherein the feedback resource information is used to indicate a correspondence between K time units in the first time domain resource and at least one feedback resource unit;
   determining, by the first terminal device based on a first time unit and the feedback resource information, a first feedback resource unit corresponding to the first time unit, wherein the first time unit is one of the K time units; and
   receiving, by the first terminal device, acknowledgment information of first sidelink data on a first feedback resource, wherein the first sidelink data is data sent by the first terminal device in the first time unit, and the first feedback resource is obtained based on the first feedback resource unit and a frequency domain resource used by the first terminal device to send the first sidelink data.

9. The method according to any one of claims 1 to 7, wherein one time unit comprising a feedback channel resource exists at an interval of K-1 time units, the feedback channel resource comprises at least one feedback resource unit, and K is an integer greater than 1; and the method further comprises:

   obtaining, by the first terminal device, feedback resource information, wherein the feedback resource information is used to indicate a correspondence between K time units in the first time domain resource and at least one feedback resource unit;
   determining, by the first terminal device based on a first time unit and the feedback resource information, a first feedback resource unit corresponding to the first time unit, wherein the first time unit is one of the K time units; and
   receiving, by the first terminal device, acknowledgment information of first sidelink data on a first feedback resource, wherein the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units.

10. The method according to claim 8 or 9, wherein the feedback resource information is used to indicate a cyclic shift value corresponding to each of the K time units, and the cyclic shift value is used to generate a code sequence.

11. A communication method, comprising:

   sending, by a second terminal device, resource configuration information to a first terminal device; and
   receiving, by the second terminal device, sidelink data from the first terminal device on a first resource, wherein a first time domain resource is a time domain resource of the first resource.

12. The method according to claim 11, wherein the resource configuration information is used to indicate a position of the first time domain resource.

13. The method according to claim 12, wherein the resource configuration information comprises:
   a first time domain resource index and a quantity M of indexes, wherein the first time domain resource index is used to indicate at least one time unit used to send the sidelink data to the second terminal device, the quantity M of indexes is a quantity of a plurality of time domain resource indexes maintained by the second terminal device, the plurality of time domain resource indexes comprise the first time domain resource index, and M is an integer greater than or equal to 2.

14. The method according to claim 12, wherein the resource configuration information comprises:

   a bitmap corresponding to the first time domain resource; or
   an index of a bitmap corresponding to the first time domain resource.

15. The method according to any one of claims 11 to 13, wherein the first resource comprises a first frequency domain resource and the first time domain resource, and the resource configuration information comprises indication information of a start frequency domain resource of the first frequency domain resource.

16. The method according to any one of claims 11 to 14, wherein the resource configuration information is further used to indicate a first frequency domain resource, and the first resource comprises the first frequency domain resource and the first time domain resource.

17. The method according to any one of claims 11 to 16, wherein one time unit comprising a feedback channel resource exists at an interval of K-1 time units, the feedback channel resource comprises at least one feedback resource unit, and K is an integer greater than 1; and the method further comprises:

   obtaining, by the second terminal device, feedback resource information, wherein the feedback resource information is used to indicate a correspondence between K time units in the first time domain resource and at least one feedback resource unit;
   determining, by the second terminal device based on a first time unit and the feedback resource information, a first feedback resource unit corresponding to the first time unit, wherein the first time unit is one of the K time units; and
   sending, by the second terminal device to the first terminal device, acknowledgment information of first sidelink data on a first feedback resource, wherein the first sidelink data is data sent by the first terminal device in the first time unit, and the first feedback resource is obtained based on the first feedback resource unit and a frequency domain resource used by the first terminal device to send the first sidelink data.

18. The method according to any one of claims 11 to 16, wherein one time unit comprising a feedback channel resource exists at an interval of K-1 time units, the feedback channel resource comprises at least one feedback resource unit, and K is an integer greater than 1; and the method further comprises:

obtaining, by the second terminal device, feedback resource information, wherein the feedback resource information is used to indicate a correspondence between K time units in the first time domain resource and at least one feedback resource unit;

determining, by the second terminal device based on a first time unit and the feedback resource information, a first feedback resource unit corresponding to the first time unit, wherein the first time unit is one of the K time units; and

sending, by the second terminal device to the first terminal device, acknowledgment information of first sidelink data on a first feedback resource, wherein the first sidelink data is data sent by the first terminal device in the first time unit, the first feedback resource is obtained based on the first feedback resource unit and a frequency domain resource used by the first terminal device to send second sidelink data in a reference time unit, and the reference time unit is the $1^{st}$ time unit in the K time units.

19. A communication apparatus, comprising:

a receiving module, configured to receive resource configuration information from a second terminal device;

a processing module, configured to determine a first time domain resource based on the resource configuration information; and

a sending module, configured to send sidelink data to the second terminal device on a first resource, wherein the first time domain resource is a time domain resource of the first resource.

20. The communication apparatus according to claim 19, wherein the resource configuration information is used to indicate a position of the first time domain resource.

21. The communication apparatus according to claim 20, wherein the resource configuration information comprises:
a first time domain resource index and a quantity M of indexes, wherein the first time domain resource index is used to indicate at least one time unit used to send the sidelink data to the second terminal device, the quantity M of indexes is a quantity of a plurality of time domain resource indexes maintained by the second terminal device, the plurality of time domain resource indexes comprise the first time domain resource index, and M is an integer greater than or equal to 2.

22. The communication apparatus according to claim 19, wherein the resource configuration information comprises:

a bitmap corresponding to the first time domain resource; or
an index of a bitmap corresponding to the first time domain resource.

23. The communication apparatus according to any one of claims 19 to 21, wherein the first resource comprises a first frequency domain resource and the first time domain resource, and the resource configuration information comprises indication information of a start frequency domain resource of the first frequency domain resource; and
the processing module is further configured to determine the start frequency domain resource of the first frequency domain resource based on the resource configuration information.

24. The communication apparatus according to any one of claims 19 to 22, wherein the resource configuration information is further used to indicate a first frequency domain resource, and the first resource comprises the first frequency domain resource and the first time domain resource; and
the processing module is further configured to determine the first frequency domain resource based on the resource configuration information.

25. The communication apparatus according to claim 24, wherein the resource configuration information comprises:

a bitmap corresponding to the first frequency domain resource; or
an index of a bitmap corresponding to the first frequency domain resource.

26. The communication apparatus according to any one of claims 19 to 25, wherein one time unit comprising a feedback channel resource exists at an interval of K-1 time units, the feedback channel resource comprises at least one feedback resource unit, and K is an integer greater than 1;

the processing module is further configured to:
obtain feedback resource information, wherein the feedback resource information is used to indicate a correspondence between K time units in the first time domain resource and at least one feedback resource unit; and
determine, based on a first time unit and the feedback resource information, a first feedback resource unit corresponding to the first time unit, wherein the first time unit is one of the K time units; and

the receiving module is further configured to receive acknowledgment information of first sidelink data on a first feedback resource, wherein the first sidelink data is data sent by the first terminal device in the first time unit, and the first feedback resource is obtained based on the first feedback resource unit and a frequency domain resource used by the first terminal device to send the first sidelink data.

27. The communication apparatus according to any one of claims 19 to 25, wherein one time unit comprising a feedback channel resource exists at an interval of K-1 time units, the feedback channel resource comprises at least one feedback resource unit, and K is an integer greater than 1;

the processing module is further configured to: obtain feedback resource information, wherein the feedback resource information is used to indicate a correspondence between K time units in the first time domain resource and at least one feedback resource unit; and
determine, based on a first time unit and the feedback resource information, a first feedback resource unit corresponding to the first time unit, wherein the first time unit is one of the K time units; and
the receiving module is further configured to receive acknowledgment information of first sidelink data on a first feedback resource, wherein the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units.

28. The apparatus according to claim 26 or 27, wherein the feedback resource information is used to indicate a cyclic shift value corresponding to each of the K time units, and the cyclic shift value is used to generate a code sequence.

29. A communication apparatus, comprising:

a sending module, configured to send resource configuration information to a first terminal device; and
a receiving module, configured to receive sidelink data from the first terminal device on a first resource, wherein a first time domain resource is a time domain resource of the first resource.

30. The communication apparatus according to claim 29, wherein the resource configuration information is used to indicate a position of the first time domain resource.

31. The communication apparatus according to claim 30, wherein the resource configuration information comprises:
a first time domain resource index and a quantity M of indexes, wherein the first time domain resource index is used to indicate at least one time unit used to send the sidelink data to the second terminal device, the quantity M of indexes is a quantity of a plurality of time domain resource indexes maintained by the second terminal device, the plurality of time domain resource indexes comprise the first time domain resource index, and M is an integer greater than or equal to 2.

32. The communication apparatus according to claim 30, wherein the resource configuration information comprises:

a bitmap corresponding to the first time domain resource; or
an index of a bitmap corresponding to the first time domain resource.

33. The communication apparatus according to any one of claims 29 to 31, wherein the first resource comprises a first frequency domain resource and the first time domain resource, and the resource configuration information comprises indication information of a start frequency domain resource of the first frequency domain resource.

34. The communication apparatus according to any one of claims 29 to 32, wherein the resource configuration information is further used to indicate a first frequency domain resource, and the first resource comprises the first frequency domain resource and the first time domain resource.

35. The communication apparatus according to any one of claims 29 to 34, wherein one time unit comprising a feedback channel resource exists at an interval of K-1 time units, the feedback channel resource comprises at least one feedback resource unit, and K is an integer greater than 1; the communication apparatus further comprises a processing module, wherein

the processing module is configured to: obtain feedback resource information, wherein the feedback resource information is used to indicate a correspondence between K time units in the first time domain resource and at least one feedback resource unit; and
determine, based on a first time unit and the feedback resource information, a first feedback resource unit corresponding to the first time unit, wherein the first time unit is one of the K time units; and

the sending module is further configured to send, to the first terminal device, acknowledgment information of first sidelink data on a first feedback resource, wherein the first sidelink data is data sent by the first terminal device in the first time unit, and the first feedback resource is obtained based on the first feedback resource unit and a frequency domain resource used by the first terminal device to send the first sidelink data.

36. The communication apparatus according to any one of claims 29 to 34, wherein one time unit comprising a feedback channel resource exists at an interval of K-1 time units, the feedback channel resource comprises at least one feedback resource unit, and K is an integer greater than 1; the communication apparatus further comprises a processing module, wherein

the processing module is configured to: obtain feedback resource information, wherein the feedback resource information is used to indicate a correspondence between K time units in the first time domain resource and at least one feedback resource unit; and

determine, based on a first time unit and the feedback resource information, a first feedback resource unit corresponding to the first time unit, wherein the first time unit is one of the K time units; and

the sending module is further configured to send, to the first terminal device, acknowledgment information of first sidelink data on a first feedback resource, wherein the first sidelink data is data sent by the first terminal device in the first time unit, the first feedback resource is obtained based on the first feedback resource unit and a frequency domain resource used by the first terminal device to send second sidelink data in a reference time unit, and the reference time unit is the 1st time unit in the K time units.

37. A communication apparatus, wherein the communication apparatus comprises a processor and a storage medium; the storage medium stores instructions; and when the instructions are run by the processor, the processor is enabled to perform the communication method according to any one of claims 1 to 10 or any one of claims 11 to 18.

38. A readable storage medium, wherein the readable storage medium stores a computer program; and when the computer program is executed, the communication method according to any one of claims 1 to 10 or any one of claims 11 to 18 is implemented.

| AGC | Data transmission | Gap | AGC | PSFCH | Gap |
|-----|-------------------|-----|-----|-------|-----|
| 1 | 8 | 1 | 1 | 2 | 1 |

FIG. 1

| AGC | PSFCH | Gap |
|-----|-------|-----|
| 1 | 12 | 1 |

FIG. 2

| PSSCH | PSFCH | PSSCH | PSFCH |

— Slot —

FIG. 3

| PSSCH | PSSCH |
| PSFCH | PSFCH |

— Slot —

FIG. 4

| PSSCH | PSSCH | PSFCH |

— Slot —

FIG. 5

| PSSCH | PSSCH |
| | PSFCH |

— Slot —

FIG. 6

FIG. 7

FIG. 8

Network device

Terminal device

**FIG. 9**

| Second terminal device | | First terminal device |

Step S101: Send resource configuration information to the first terminal device

Step S102: Determine a first time domain resource based on the resource configuration information

Step S103: Send sidelink data to the second terminal device on a first resource (where the first resource includes the first time domain resource and a first frequency domain resource)

**FIG. 10**

FIG. 11

FIG. 12

FIG. 13

FIG. 14

EP 3 952 360 A1

PSCCH · PSCCH · PSFCH · PSCCH · PSCCH · PSFCH · PSCCH · PSCCH · PSCCH · PSFCH · PSCCH · PSCCH · PSCCH · PSFCH

Sending terminal device a

Sending terminal device b

Sending terminal device c

Sending terminal device a

Sending terminal device b

Sending terminal device c

Sending terminal device a

Sending terminal device b

Sending terminal device c

| 2 | 3 | 4 | 5 | 6 | 7 | 8 | 9 | 10 | 11 |

FIG. 15

Subchannel 1 — PSCCH | Sending terminal device a | PSFCH | PSCCH | Sending terminal device b | PSCCH | Sending terminal device c | Sending terminal device a | PSFCH | PSCCH | Sending terminal device b | PSCCH | Sending terminal device c | PSCCH | Sending terminal device a | PSFCH | PSCCH | Sending terminal device b | PSCCH | Sending terminal device c | PSCCH | PSFCH

Subchannel 2 — PSCCH | PSFCH | PSCCH | PSCCH | PSCCH | PSFCH | PSCCH | PSCCH | PSCCH | PSFCH | PSCCH | PSCCH | PSCCH | PSFCH

Subchannel 3 — PSCCH | PSFCH | PSCCH | PSCCH | PSCCH | PSFCH | PSCCH | PSCCH | PSCCH | PSFCH | PSCCH | PSCCH | PSCCH | PSFCH

2    3    4    5    6    7    8    9    10    11

FIG. 16

FIG. 17

A sending terminal device obtains feedback resource information, where the feedback resource information is used to indicate a correspondence between K time units in a first time domain resource and at least one feedback resource unit, one time unit including a feedback channel resource exists at an interval of K–1 time units, and the feedback channel resource includes at least one feedback resource unit

— S201

The sending terminal device determines, based on a first time unit and the feedback resource information, a first feedback resource unit corresponding to the first time unit, where the first time unit is one of the K time units

— S202

The sending terminal device receives acknowledgment information corresponding to first sidelink data on a first feedback resource, where the first sidelink data is data sent by the sending terminal device in the first time unit, and the first feedback resource is obtained based on the first feedback resource unit and a frequency domain resource used by the sending terminal device to send the first sidelink data

— S203

FIG. 18

FIG. 19

FIG. 20

A receiving terminal device obtains feedback resource information, where the feedback resource information is used to indicate a correspondence between K time units in a first time domain resource and at least one feedback resource unit, one time unit including a feedback channel resource exists at an interval of K−1 time units, and the feedback channel resource includes at least one feedback resource unit ⟋— S301

The receiving terminal device determines, based on a first time unit and the feedback resource information, a first feedback resource unit corresponding to the first time unit, where the first time unit is one of the K time units ⟋— S303

The receiving terminal device sends, to a sending terminal device, acknowledgment information of first sidelink data on a first feedback resource, where the first sidelink data is data sent by the sending terminal device in the first time unit, and the first feedback resource is obtained based on the first feedback resource unit and a frequency domain resource used by the sending terminal device to send the first sidelink data ⟋— S303

FIG. 21

A sending terminal device obtains feedback resource information, where the feedback resource information is used to indicate a correspondence between K time units and at least one feedback resource unit, one time unit including a feedback channel resource exists at an interval of K–1 time units, and the feedback channel resource includes at least one feedback resource unit

S401

The sending terminal device determines, based on a first time unit and the feedback resource information, a first feedback resource unit corresponding to the first time unit, where the first time unit is one of the K time units

S402

The sending terminal device receives acknowledgment information of first sidelink data on a first feedback resource, where the first sidelink data is data sent by the sending terminal device in the first time unit, the first feedback resource is obtained based on the first feedback resource unit and a frequency domain resource used by the sending terminal device to send second sidelink data in a reference time unit, and the reference time unit is the 1st time unit in the K time units

S403

FIG. 22

FIG. 23

A receiving terminal device obtains feedback resource information, where the feedback resource information is used to indicate a correspondence between K time units in a first time domain resource and at least one feedback resource unit, one time unit including a feedback channel resource exists at an interval of K–1 time units, and the feedback channel resource includes at least one feedback resource unit

S501

The receiving terminal device determines, based on a first time unit and the feedback resource information, a first feedback resource unit corresponding to the first time unit, where the first time unit is one of the K time units

S502

The receiving terminal device sends, to a sending terminal device, acknowledgment information of first sidelink data on a first feedback resource, where the first sidelink data is data sent by the sending terminal device in the first time unit, the first feedback resource is obtained based on the first feedback resource unit and a frequency domain resource used by the sending terminal device to send second sidelink data in a reference time unit, and the reference time unit is the 1st time unit in the K time units

S503

FIG. 24

FIG. 25

FIG. 26

FIG. 27

Communication apparatus

Receiving module —— 902

Sending module —— 901

FIG. 28

Communication apparatus

Receiving module —— 902

Processing module —— 903

Sending module —— 901

FIG. 29

## INTERNATIONAL SEARCH REPORT

International application No.

**PCT/CN2020/087380**

| A. | CLASSIFICATION OF SUBJECT MATTER |
|---|---|
| | H04W 4/70(2018.01)i |

According to International Patent Classification (IPC) or to both national classification and IPC

| B. | FIELDS SEARCHED |
|---|---|

Minimum documentation searched (classification system followed by classification symbols)

H04W H04Q H04L

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE, 3GPP: 第一终端, 第二终端, 资源配置, 时域, 位置, 侧行链路, 索引, 数量, 比特, 位图, 反馈; V2X, V2V, resource allocation, time, location, sidelink, index, bit, map, feedback, ACK, PSFCH, HARQ

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 105992364 A (ZTE CORPORATION) 05 October 2016 (2016-10-05) description, paragraphs [0002]-[0008], [0119]-[0125], figure 11 | 1-38 |
| A | CN 109217989 A (HUAWEI TECHNOLOGIES CO., LTD.) 15 January 2019 (2019-01-15) entire document | 1-38 |
| A | WO 2019007184 A1 (TELECOMMUNICATIONS SCIENCE AND TECHNOLOGY RESEARCH INSTITUTE CO., LTD.) 10 January 2019 (2019-01-10) entire document | 1-38 |
| A | INTEL CORPORATION. ""Sidelink Physical Structure for NR V2X Communication"" *3GPP TSG RAN WG1 RAN1#96bis, R1-1904294,* 03 April 2019 (2019-04-03), entire document | 1-38 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2020** | **27 July 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/087380**

| Patent document cited in search report | | | Publication date (day/month/year) | Patent family member(s) | | | Publication date (day/month/year) |
|---|---|---|---|---|---|---|---|
| CN | 105992364 | A | 05 October 2016 | US | 2018054804 | A1 | 22 February 2018 |
| | | | | EP | 3267748 | A1 | 10 January 2018 |
| | | | | WO | 2016138822 | A1 | 09 September 2016 |
| CN | 109217989 | A | 15 January 2019 | WO | 2019001409 | A1 | 03 January 2019 |
| | | | | EP | 3629652 | A1 | 01 April 2020 |
| | | | | US | 2020137782 | A1 | 30 April 2020 |
| WO | 2019007184 | A1 | 10 January 2019 | CN | 109428692 | A | 05 March 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910364457